# EUROPÄISCHE PATENTSCHRIFT

(11) **EP 2 820 741 B1**
(45) Veröffentlichungstag und Bekanntmachung des Hinweises auf die Patenterteilung: **06.07.2016**
(21) Anmeldenummer: 13707613.9
(22) Anmeldetag: 01.03.2013
(51) Int. Cl.: H02J 13/00

(54) **NETZINFRASTRUKTURKOMPONENTE, VERBUNDSYSTEM MIT EINER MEHRZAHL VON NETZINFRASTRUKTURKOMPONENTEN SOWIE VERWENDUNG DES VERBUNDSYSTEMS**
NETWORK INFRASTRUCTURE COMPONENT, COMPOSITE SYSTEM HAVING A PLURALITY OF NETWORK INFRASTRUCTURE COMPONENTS, AND USE OF THE COMPOSITE SYSTEM
COMPOSANTS D'UNE INFRASTRUCTURE RÉSEAU, SYSTÈME MIXTE DOTÉ D'UNE PLURALITÉ DE COMPOSANTS D'INFRASTRUCTURE RÉSEAU, ET UTILISATION DU SYSTÈME MIXTE

(30) Priorität: 02.03.2012 DE 102012101799
(43) Veröffentlichungstag der Anmeldung: 07.01.2015
(73) Patentinhaber: Ropa Development GmbH, 73525 Schwaebisch Gmuend (DE)
(72) Erfinder: DOERNDORFER, Johannes, 73525 Schwaebisch Gmuend (DE)
(74) Vertreter: Hössle, Markus
(86) Internationale Anmeldenummer: PCT/EP2013/054192
(87) Internationale Veröffentlichungsnummer: WO 2013/128007

(56) Entgegenhaltungen:
- US-A- 5 289 365
- US-A1- 2011 196 513

## Beschreibung

Die vorliegende Erfindung betrifft eine Netzinfrastrukturkomponente mit zumindest einer Kontakteinheit zur Verbindung mit einer weiteren Netzinfrastrukturkomponente und mit zumindest einem Kopplungsmodul zur Ankopplung einer Funktionsgruppe, wobei die Netzinfrastrukturkomponente dazu ausgebildet ist, mit einer angekoppelten Funktionsgruppe und mit zumindest einer weiteren Netzinfrastrukturkomponente zumindest auf einer Versorgungsebene zu kommunizieren. Die Erfindung betrifft ferner ein Verbundsystem mit einer Mehrzahl solcher Netzinfrastrukturkomponenten sowie Verwendungen eines solchen Verbundsystems.

Netzinfrastrukturkomponenten, auch bezeichnet als Knoten, können aufgrund ihrer Koppelfunktionalität einen Aufbau von Netzen ermöglichen, bei denen mehrere Netzinfrastrukturkomponenten mittelbar oder unmittelbar miteinander gekoppelt sind. Dabei kann eine Mehrzahl der Netzinfrastrukturkomponenten dazu ausgebildet sein, mit zumindest einer an diese gekoppelten Funktionsgruppe zu kommunizieren.

Auf diese Weise lassen sich etwa Versorgungsnetze (auch bezeichnet als vermaschte Netze oder als Mesh), beispielsweise Stromnetze (auch bezeichnet als sogenannte Grids), realisieren. Ein derartiges Versorgungsnetz kann dazu ausgestaltet sein, ein Netzmedium (alternativ: mehrere Netzmedien) bedarfsgerecht zu verteilen. Netzteilnehmer können etwa Erzeuger, Quellen, Senken, Verbraucher, Puffer, Speicher oder Ähnliches sein. Diese können als sogenannte Funktionsgruppen mit dem Verbundsystem (Netz) gekoppelt sein. Es versteht sich, dass einzelne Funktionsgruppen gleichzeitig oder im zeitlichen Wechsel mehrere der vorgenannten Rollen einnehmen können.

Aus der US 2009/0088907 A1 ist ein Stromnetz mit einer modularen Schnittstelleneinrichtung (ein sogenanntes Smart Grid Gateway) zur Verwaltung und Steuerung von Erzeugern, Speichern und Verbrauchern bekannt. Die US 2008/0052145 A1 offenbart ein System zur Aggregation von verteilten elektrischen Ressourcen. Aus der DE 10 2009 044 161 A1 sind ein System und ein Verfahren zur Steuerung miteinander gekoppelter Energieerzeugungs-, Speicher- und/oder Verbrauchseinheiten bekannt. Ferner zeigt die US 2009 0030712 A1 ein System zur Ankopplung eines Fahrzeugs an ein Stromnetz.

Es sind verschiedene Ansätze zur Realisation von Stromnetzen bekannt. Beispielsweise werden im öffentlichen Stromnetz Verbraucher auf verschiedenen Spannungsebenen mit elektrischer Energie versorgt, die wiederum aus verschiedenen Quellen auf verschiedenen Spannungsebenen in das Stromnetz eingespeist werden. Bei den Verbrauchern kann es sich etwa um Haushalte, gewerbetreibende kleine und große Industriebetriebe mit stark divergierendem Bedarf handeln. Auch auf der Erzeugerseite liegt häufig ein breites Spektrum vor, beispielsweise Windkraftanlagen, Solarkraftwerke, Biogasanlagen, Blockheizkraftwerke, Wasserkraftwerke, Großkraftwerke, Atomkraftwerke oder Ähnliches, die charakteristische Leistungsbereiche aufweisen und kontinuierlich oder aber mehr oder weniger stark schwankungsbehaftet einspeisen können. Im Einklang mit den Charakteristiken auf Erzeugerseite und Verbraucherseite finden sich im Stromnetz verschiedene Spannungsebenen, die etwa über Umspannwerke miteinander koppelbar sind. Die Spannungsebenen können beispielsweise Höchstspannung, Hochspannung, Mittelspannung und Niederspannung umfassen. Zur Wahrung des Gleichgewichts zwischen Erzeugern und Verbrauchern ist es erforderlich, Instanzen vorzusehen, die etwa verbrauchsabhängig Kapazitäten zu- oder abschalten können. Ein derartiges Netzmanagement kann beispielsweise auf Erfahrungswerten beruhen, etwa Tag-Nacht-Schwankungen oder jahreszeitlich bedingten Schwankungen. Es ist jedoch nicht möglich, den Bedarf von Verbrauchern genau zu erfassen, bevor diese an das Stromnetz angekoppelt sind und Leistung abfordern. Aus diesem Grund und zur Abfederung spontaner Lastspitzen ist es erforderlich, stets eine Leistungsreserve im Stromnetz vorzuhalten.

Ein Stromnetz kann jedoch auch im kleineren Maßstab realisiert werden, beispielsweise bei einem Elektrofahrzeug oder bei einem "netzunabhängig" betriebenen Werkzeug mit Akkumulatoren. Bei einem Elektrofahrzeug kann es sich etwa um ein Elektrofahrrad, ein sogenanntes Pedelec, einen Personenkraftwagen mit reinem Elektroantrieb oder mit einem sogenannten Hybridantrieb, ein Fahrzeug für den industriellen Einsatz, beispielsweise einen Hubwagen oder einen Gabelstapler, oder Ähnliches handeln. Netzunabhängige Handwerkzeuge sind etwa als Akkuschrauber oder Akkubohrer bekannt. Nahezu alle bekannten Systeme zur netzunabhängigen Energieversorgung sind als sogenannte proprietäre Systeme gestaltet. Das heißt, regelmäßig sind Sytemkomponenten systemspezifisch ausgebildet, insbesondere herstellerspezifisch. Mit anderen Worten ist es nicht möglich, Energieverbraucher oder Energiespeicher verschiedener Systeme miteinander zu koppeln, um etwa vorhandene Restenergie von einem System auf ein anderes System zu übertragen.

Ferner sind erste Ansätze für intelligente Stromnetze (sogenannte Smart Grids) bekannt. Ein derartiger Ansatz beruht darauf, neben dem eigentlichen Stromnetz ein Datennetz zu etablieren, um zwischen Erzeugern und Verbrauchern Betriebsdaten austauschen zu können. Bei einem Smart Grid kann beispielsweise Haustechnik bewusst dann als Verbraucher ans Stromnetz gekoppelt werden, wenn eine aktuelle Nachfragedelle zu einem niedrigen (Momentan-) Strompreis führt. Smart Grid Systeme bedürfen jedoch einer übergeordneten zentralen Regelstruktur. Strukturelle Vorgaben stehen einer weiteren Flexibilisierung im Wege.

Ein weiteres Beispiel einer Anwendung mit einer Bündelung von Stromleitung und Datenleitung ist der sogenannte EnergyBus Standard für mobile Anwendungen, insbesondere für mobile Leichtfahrzeuge. Ziel des Standards sind Vorgaben für beteiligte Systemkomponenten, um weg von proprietären hin zu "offenen" Antriebssystemen für Elektrofahrzeuge zu gelangen. Zu diesem Zweck ist es beabsichtigt, etwa Energiespeicher und Ladestationen dahingehend zu standardisieren, dass herstellerübergreifende Kompatibilität erreicht wird. Beim EnergyBus Standard weisen die Energiespeicher selbst ein Regelsystem auf, das dazu ausgebildet ist, Ladevorgänge und Leistungsabgaben zu regeln. Auf diese Weise kann etwa beim EnergyBus Standard eine Mehrzahl von Energiespeichern (Batterien) parallel miteinander gekoppelt werden. Ein EnergieBus standardkonformes System ist in gewissen Grenzen skalierbar.

Aus dem Gebiet der Informationstechnologie sind verschiedene Standards bekannt, bei denen in einem Netz sowohl (elektrische) Energie als auch Daten übertragen werden können. Hierzu gehören etwa der Universal Serial Bus (USB) Standard und der Power over Ethernet (PoE) Standard. Bei diesen Systemen tritt jedoch die Energieübertragung gegenüber der Datenübertragung in den Hintergrund. Mit derartigen Standards kann kein Netz aufgebaut werden, das im Wesentlichen der Energieversorgung dient.

In der Automatisierungstechnik und in der Fahrzeugtechnik finden sich weitere Ansätze für busartige Netze zur Stromversorgung und Datenübertragung. Insbesondere im Fahrzeugbereich liegen kaum etablierte Standards vor. Fahrzeugspezifisch kann etwa eine mögliche Maximalleistung eines an ein Bordnetz gekoppelten Verbrauchers stark schwanken. Somit sind im Alltag häufig Spannungsabfälle, Überlastungen, ein Auslösen von Sicherungen oder sogar weiterführende Schäden in der Fahrzeugelektronik zu beobachten.

Weitere Herauforderungen stellen sich auf dem Gebiet der Elektromobilität. Mit zunehmender Marktdurchdringung ist davon auszugehen, dass ausgeprägtere Schwankungen im öffentlichen Stromnetz auftreten werden. Dies ist insbesondere dann der Fall, wenn eine Vielzahl von Elektrofahrzeugen gleichzeitig räumlich konzentriert am Stromnetz aufgeladen werden soll. Aus Sicht des konventionellen Stromnetzes kann etwa bei drohender Überlastung die Ankoppllung weiterer Verbraucher nicht verhindert werden, so dass unter Umständen erst mit einem Netzzusammenbruch auf die dann eintretende Überlastung reagiert wird.

Eine mögliche Umgehung dieses Problems könnte etwa darin bestehen, komplette Batterieeinheiten austauschbar zu gestalten und an entsprechenden "Tankstellen" zum Wechsel vorzuhalten. Ein derartiger Ansatz leidet jedoch darunter, dass bekannte Batterieeinheiten für Elektrofahrzeuge grundsätzlich fahrzeugspezifisch bzw. herstellerspezifisch gestaltet sind.

In ähnlicher Weise können etwa bei handelsüblichen netzunabhängigen Elektrowerkzeugen bestenfalls Akkumulatoren zwischen ähnlichen Geräten eines Herstellers getauscht werden. Herstellerübergreifend liegen grundsätzlich verschiedene Standards und Anschlussmaße vor.

Um etwa für Elektrofahrzeuge erforderliche Leistungsbereiche abdecken zu können, werden regelmäßig in Batterieeinheiten eine Vielzahl von (Akkumulator-) Zellen miteinander gekoppelt. Einzelzellen unterliegen einer statistischen Ausfallwahrscheinlichkeit und einer Reduzierung der Leistungsfähigkeit über die Lebensdauer. Insbesondere bei miteinander in Reihe verschalteten Zellen können Ausfälle oder Leistungseinbußen auf der Ebene der Einzelzelle Leistungseinbußen oder gar Ausfälle der gesamten Batterieeinheit verursachen.

Mit dem Kauf eines Elektrofahrzeugs oder eines netzunabhängig betreibbaren Handwerkzeugs gehen Verbraucher häufig eine Zwangsbeziehung mit einem einzigen Hersteller betreffend den Energiespeicher ein. Ungeachtet der Tatsache, dass die Energiespeicher lediglich elektrische Energie in bestimmter Weise zur Verfügung stellen sollen, führt eine Vielzahl herstellerspezifischer Kontaktierungen, Geometrien und ähnlicher Randbedingungen zu einer unüberschaubaren Teilevielfalt. Dies geht mit entsprechend hohen Herstellungskosten und Logistikkosten einher.

Aus Herstellersicht ergeben sich durch proprietäre Energiespeichersysteme verschiedene Nachteile. Energiespeicher müssen unter anderem mechanische Belastungstests bestehen, um Marktreife zu erlangen. Insbesondere bei Batterien auf Lithiumionenbasis kann nach mechanischer Beschädigung eine Brandgefahr drohen. Mit steigender Variantenzahl steigt folglich auch der Aufwand für Messungen und Prüfungen, um eine Serientauglichkeit unter Beweis zu stellen.

Liegen elektrisch miteinander inkompatible Systeme vor, beispielsweise Ladegeräte und Batterieeinheiten verschiedener Hersteller, kann es sogar gewünscht sein, auch eine mechanische Imkompatibilität vorzusehen, um ein versehentliches Koppeln solcher Geräte zu vermeiden. Eine solche Fehlkopplung könnte einerseits dazu führen, dass die Batterieeinheit nicht vollständig aufgeladen wird, andererseits können sowohl bei der Batterie als auch beim Gerät Schäden auftreten, bis hin zu einer Brandgefahr. Mit zunehmender Verbreitung von Batterieeinheiten für verschiedenste Einsätze rückt auch die Einstufung bestimmter Batterietypen als Gefahrgut in den Vordergrund. So bestehen etwa für Lithiumionenbatterien abhängig von deren Kapazität bzw. des Gewichts verschiedene Transport- und Lagervorschriften, bei denen insbesondere auf die Gefahr einer Entzündung abgestellt wird.

Die vorhandene Inkompatibilität bestehender Energiespeicher führt jedoch gerade dazu, dass etwa Hersteller, Großhändler, Händler und selbst Verbraucher in ihrem Umfeld mehr Energiespeicher vorhalten und gebrauchen, als dies aus Bedarfssicht überhaupt erforderlich wäre.

So müssen etwa Logistikdienstleister eine Vielzahl von produktspezifischen Batterieeinheiten vorhalten und bei Bedarf ausliefern. Batteriepacks können jedoch die Eigenheit aufweisen, bei zu langer Lagerung einer Tiefenentladung zu unterliegen. Damit können Leistungseinbußen beim späteren Gebrauch oder gar ein vollständiger Defekt einhergehen. Gegebenenfalls erforderliche Ladevorgänge zur Erhaltung der Lebensdauer während de Lagerung tragen zu einer weiteren Erhöhung der Logistikkosten und somit der Systemkosten bei.

Schließlich ist die immense Variantenvielfalt und die Inkompatibilität verschiedener Batterieeinheiten auch zum Abschluss des Lebenszyklus von Nachteil. Einerseits weisen Batteriepacks begehrte und teure Rohstoffe auf. Andererseits können gerade auch beim Recycling die vorgenannten Probleme auftreten.

Generell ist festzustellen, dass bekannte Stromversorgungsnetzwerke, insbesondere solche mit wesentlicher Einbindung von Batterieeinheiten, verschiedenen Nachteilen unterliegen. Selbst bei fortschrittlichen Netzen, wie etwa bei Smart Grid Netzen oder EnergieBus Netzen, kann keine wirklich bedarfsgerechte Regelung und Steuerung erfolgen. Vielmehr unterliegen auch solche Netze relativ starren Restriktionen, vor allem Im Hinblick auf die Steuerung durch eine übergeordnete, zentrale Instanz. Aus der US 2011/196513 A1 ist eine Netzinfrastrukturkomponente gemäß dem Oberbegriff des Anspruchs 1 bekannt.

Vor diesem Hintergrund liegt der vorliegenden Erfindung die Aufgabe zugrunde, eine Netzinfrastrukturkomponente und ein Verbundsystem mit einer Mehrzahl von Netzinfrastrukturkomponenten anzugeben, die eine flexible Gestaltung und Strukturierung von Versorgungsnetzen ermöglichen, die flexibel erweiterbar sind, eine hohe Bauteilkompatibilität aufweisen und den Herausforderungen begegnen können, die sich insbesondere durch die aufkommende Elektromobilität und die Einbindung dezentraler (regenerativer) Energieversorgungssysteme und Speichersysteme in Versorgungsnetzstrukturen ergeben.

Zur Lösung der Aufgabe wird eine Netzinfrastrukturkomponente mit
den Merkmalen des Anspruchs 1 vorgeschlagen.

Die Aufgabe der Erfindung wird auf diese Weise vollkommen gelöst.

Eine Netzinfrastrukturkomponente (vereinfacht auch bezeichnet als Knoten) kann in einem Verbundsystem (vereinfacht auch bezeichnet als Netzwerk) die Funktionalität eines Knotenpunkts bereitstellen. Ein solcher Knotenpunkt kann mit weiteren Knotenpunkten (Netzinfrastrukturkomponenten) kommunizieren, so dass das Verbundsystem insgesamt eine Funktionalität bereitstellen kann, die einer Selbstverwaltung bzw. Selbstregelung nahekommen oder gleichkommen kann. Eine an die Netzinfrastrukturkomponente gekoppelte Funktionsgruppe ist körperlich nur mit dieser verbunden, kann jedoch mittelbar für weitere Netzinfrastrukturkomponenten im Verbundsystem "spürbar" sein, da die einzelnen Netzinfrastrukturkomponenten miteinander Daten austauschen können.

Bei der Funktionsgruppe kann es sich etwa um einen Erzeuger, einen Speicher, eine Senke, bzw. einen Verbraucher, ebenso jedoch auch um eine Kopplung mit einem (Fremd-) Netz handeln. Es versteht sich, dass auch Mischformen denkbar sind, etwa eine Funktionsgruppe, die temporär als Verbraucher, Speicher und/oder Erzeuger auftreten kann.

Mit anderen Worten kann die Netzinfrastrukturkomponente für das Verbundsystem die Funktionalität eines "Steckers" bereitstellen. Ein solcher "Stecker" ist jedoch nicht blind in das System eingesteckt, sondern kann vielmehr mit seinen unmittelbar oder mittelbar benachbarten Steckern Daten austauschen, die etwa die angekoppelten Funktionsgruppen im Verbundsystem beschreiben können.

Die Unterteilung von "Steckeranschlüssen" in Kontakteinheiten und Kopplungsmodule kann sicherstellen, dass mit der Netzinfrastrukturkomponente zu verbindende Bauteile korrekt zugeordnet werden. Durch mehrere miteinander mittels der jeweiligen Kontakteinheiten verbundene Netzinfrastrukturkomponenten kann sich die "Intelligenz" des Verbundsystems netzintern realisieren.

Es ist weiter bevorzugt, wenn die Netzinfrastrukturkomponente eine Steuereinrichtung zur Steuerung von Betriebsparametern aufweist, insbesondere für eine Lastregelung auf der Versorgungsebene.

Die Steuereinrichtung kann in gewünschter Weise die Kommunikation der angekoppelten Funktionsgruppe auf der Versorgungsebene regeln. Dabei kann es sich etwa um eine Speisung in das Verbundsystem oder eine Entnahme aus dem Verbundsystem handeln.

Die Steuereinrichtung ist ferner dazu ausgebildet, auf der Datenebene mit weiteren gekoppelten Netzinfrastrukturkomponenten Betriebsparameter wie Verbrauchsdaten, Kapazitäten, Leistungsanforderungen, Leistungsbereitstellungen oder Ähnliches austauschen.

Es versteht sich, dass die Steuereinrichtung der Netzinfrastrukturkomponente auch Steuerungsaufgaben einer weiteren angekoppelten Netzinfrastrukturkomponente übernehmen kann. Alternativ dazu ist es denkbar, im Verbundsystem ausschließlich Netzinfrastrukturkomponenten vorzusehen, deren (interne) Regelung von ihrer eigenen Steuereinrichtung vollzogen wird, wobei sich die Steuereinrichtungen untereinander zu Koordinationszwecken austauschen können.

Gemäß einer weiteren Ausgestaltung ist die Steuereinrichtung ferner dazu ausgebildet, Kenndaten der angekoppelten Funktionsgruppe zu erfassen, insbesondere auf der Versorgungsebene und/oder der Datenebene.

Auf diese Weise kann die Netzinfrastrukturkomponente auch mit der angekoppelten Funktionsgruppe auf der Datenebene kommunizieren. Beispielsweise können der Steuereinrichtung Identifikationsdaten der Funktionsgruppe zugeführt werden. Ferner können etwa statische oder dynamische Betriebsparameter von der Steuereinrichtung bei der Lastregelung berücksichtigt werden.

Im Verbundsystem können sich die Netzinfrastrukturkomponenten hinsichtlich der Kenndaten ihrer angekoppelten Funktionsgruppen austauschen. Damit einhergehend kann sich eine koordinierte Lastregelung auf der Versorgungsebene im Verbundsystem ergeben, gleichwohl diese Regelung durch verteilte Steuereinrichtungen einzelner oder aller Netzinfrastrukturkomponenten durchgeführt wird.

Somit kann das Verbundsystem autark selbstständig regelbar sein. Es ist insbesondere keine übergeordnete Kontroll- und Steuerinstanz erforderlich, die eine zentrale Lastregelung vornimmt:

Gemäß einer weiteren Ausgestaltung ist die Steuereinrichtung dazu ausgebildet, Betriebsparameter zumindest einer weiteren kontaktierten Netzinfrastrukturkomponente bei der Steuerung zu berücksichtigen.

Diese Maßnahme kann dazu beitragen, die für eine Lastregelung bereitgestellte Datenbasis zu vergrößern. Mit anderen Worten kann durch den Datenaustausch bei der Steuereinrichtung der Netzinfrastrukturkomponente beispielsweise eine Belastung des Verbundsystems durch nicht direkt angekoppelte entfernte Funktionsgruppen "sichtbar" gemacht oder "simuliert" werden. Auf diese Weise kann eine integrierte Lastregelung unter Beachtung einer Gesamtlast erfolgen, die auf einzelne verteilte Funktionsgruppen im Verbundsystem zurückgeht. Es kann ein "organisches" System realisiert werden, das gleichwohl offen, flexibel und erweiterbar ist.

Gemäß einer weiteren Ausgestaltung ist die Steuereinrichtung dazu ausgebildet, erfasste Betriebsparameter auf der Datenebene an zumindest eine weitere kontaktierte Netzinfrastrukturkomponente zu übermitteln.

So ist es denkbar, hinsichtlich ihrer Steuereinrichtung "passive" oder "aktive" Netzinfrastrukturkomponenten vorzusehen, die etwa von ihren benachbarten Netzinfrastrukturkomponenten geregelt werden oder aber auf diese regelnd einwirken. Es versteht sich, dass die Einordnung "passive Netzinfrastrukturkomponente" oder "aktive Netzinfrastrukturkomponente" logisch auf einer Programmebene oder aber strukturell durch Vorsehen entsprechender Bauteile getroffen werden kann.

Gemäß einer Weiterbildung weist die Netzinfrastrukturkomponente ferner zumindest ein Sensorelement auf, insbesondere einen Temperatursensor und/oder einen Beschleunigungssensor, wobei das zumindest eine Sensorelement durch die Steuereinrichtung ansprechbar ist.

Auf diese Weise können weitere Daten erfasst und für die Lastregelung des Verbundsystems genutzt werden. Insbesondere können potentiell schädliche Betriebsbedingungen erkannt werden. Beispielsweise kann mittels des Beschleunigungssensors eine mechanische Beschädigung erkannt werden und zur Vermeidung von Folgeschäden auf das Verbundsystem eingewirkt werden. Auf diese Weise kann etwa bei einem Elektrofahrzeug nach einem Unfall ein selbsttätiger kontrollierter Entladevorgang initiiert werden.

Der Temperatursensor kann Daten erfassen, die etwa auf eine aktuelle Belastung der Netzinfrastrukturkomponente bzw. der daran angekoppelten Funktionsgruppe schließen lassen. Ferner erlaubt eine Temperaturerfassung einen Rückschluss auf Umgebungsbedingungen, wonach die Lastregelung entsprechend angepasst werden kann. So ist es bekannt, dass nutzbare Batteriekapazitäten von Umgebungstemperaturen abhängig sein können.

In bevorzugter Weiterbildung ist die Netzinfrastrukturkomponente ferner dazu ausgebildet, mit zumindest einer weiteren Netzinfrastrukturkomponente und/oder der angekoppelten Funktionsgruppe auf einer Hilfsenergieebene, insbesondere einer Hilfsspannungsebene, zu kommunizieren.

Durch diese Maßnahme kann sich eine "Aufwach-Funktionalität" realisieren lassen. Die Hilfsspannungsebene kann es beispielsweise erlauben, die Steuereinrichtung, die Sensorelemente, weitere Netzinfrastrukturkomponenten sowie vergleichbare Komponenten auf Seiten der angekoppelten Funktionsgruppe mit einer Betriebsspannung zu versorgen. Auf diese Weise können etwa Kenndaten und Betriebsparameter des Verbundsystems erfasst und ausgewertet werden, bevor auf der Versorgungsebene Netzmedien geleitet werden. Damit kann beispielsweise eine drohende Überlastung des Verbundsystems erkannt werden, bevor diese überhaupt eintritt. Somit kann die Betriebssicherheit des Verbundsystems weiter verbessert werden. Eine Erweiterung oder Neuinstallation eines Verbundsystems muss nicht mehr nach der Versuch-Irrtum-Methode erfolgen, bei der erst im operativen Betrieb eventuell auftretende Überlastungen erkennbar sind.

Gemäß einer weiteren Ausgestaltung weist die Netzinfrastrukturkomponente eine Authentifikationseinheit für einen Benutzer auf, die insbesondere mit der Steuereinrichtung gekoppelt ist.

Daneben ist es auch denkbar, dass die Netzinfrastrukturkomponente eine Authentifikationseinheit aufweist, deren Daten der Steuereinrichtung einer mit dieser gekoppelten weiteren Netzinfrastrukturkomponente zugeführt werden.

Die Authentifikationseinheit kann eine rollenbasierte bzw. regelbasierte Zugriffskontrolle erlauben. Lediglich authorisierte Benutzergruppen können das Verbundsystem in Betrieb nehmen und/oder tiefergehende Eingaben bzw. Änderungen vornehmen. So ist es denkbar, ein bestehendes Verbundsystem zu "fixieren", um eine manuelle Hinzufügung weiterer Netzinfrastrukturkomponenten durch unautorisierte Benutzer zu unterbinden.

Eine Authentifikation kann etwa schlüsselbasiert erfolgen. Vorzugsweise erfolgt eine Authentifizierung im Wesentlichen kontaktlos, beispielsweise mittels eines RFID-Schlüssels.

Gemäß einer weiteren Gestaltung stellt die Steuereinrichtung regelbasierte Zugriffsrechte für einen Benutzer bereit.

Derlei gestaltete Zugriffsrechte können etwa manuelle Eingriffe in die Steuereinrichtung und somit in die Lastregelung durch autorisierte Benutzer ermöglichen. Die Autorisierung hierfür kann etwa durch die Authentifikationseinheit oder aber durch eine Funktionsgruppe erfolgen, die mit der Netzinfrastrukturkomponente gekoppelt ist. Hierbei kann es sich etwa um einen Server handeln, der drahtlos oder drahtgebunden mit dem Kopplungsmodul verbunden ist. Es versteht sich, dass das Verbundsystem grundsätzlich eine interne autarke Lastregelung aufweisen kann. Gleichwohl spricht dies nicht dagegen, ein Monitoring (auch: Überwachung) bzw. Regeleingriffe von außen zu ermöglichen.

Gemäß einer weiteren Gestaltung ist die Steuereinrichtung dazu ausgebildet, eine Lastbegrenzung und/oder Lastabschaltung für die angekoppelte Funktionsgruppe durchzuführen.

Auf diese Weise kann insbesondere unter Auswertung der gewonnenen Kenndaten bzw. Betriebsparameter eine "Software-Sicherung" verwirklicht werden. Insbesondere im Falle drohender Schäden oder gar potentieller Gefahr empfiehlt es sich, wenn das Verbundsystem selbsttätig Funktionsgruppen abschalten bzw. abtrennen kann.

Gemäß einer weiteren Ausgestaltung erfolgt die Kommunikation auf der Datenebene mit der zumindest einen weiteren Netzinfrastrukturkomponente und/oder der angekoppelten Funktionsgruppe mittels drahtloser Datenübertragung, vorzugsweise mittels elektromagnetischer Wellen, weiter bevorzugt mittels RFID-Technik.

Beispielsweise können die Funktionsgruppen bzw. die Netzinfrastrukturkomponenten insbesondere im Bereich jeweiliger Kontakteinheiten bzw. Kopplungsmodule RFID-Transponder aufweisen, die vom jeweiligen Kopplungspartner auslesbar sind. Die Transponder können etwa als aktive oder passive Transponder ausgestaltet sein.

So können etwa auf einem RFID-Transponder einer zu koppelnden Funktionsgruppe Anschlussdaten und Kennwerte gespeichert sein, die es der Netzinfrastrukturkomponente erlauben, zu beurteilen, ob die einzubindende Last für das Verbundsystem verkraftbar ist.

Es ist ferner vorstellbar, auf beiden Seiten einer Verbindung, etwa zwischen zwei Netzinfrastrukturkomponenten bzw. zwischen einer Netzinfrastrukturkomponente und einer Funktionsgruppe, jeweils Transponder und Leseeinheit vorzusehen, um bei Bedarf in beiden Richtungen vollwertige Daten austauschen zu können. Dies kann etwa im Duplexbetrieb oder sequentiell erfolgen.

Eine drahtlose Kommunikation auf der Datenebene erlaubt eine konsequente Trennung zwischen der Versorgungsebene und der Datenebene und kann die Gefahr von Fehlkontaktierungen, Steckerdefekten oder Ähnlichem weiter verringern. Es versteht sich, dass Transponder und/oder Sensor unmittelbar an einer Kopplungsstelle verbaut sein können, jedoch ist keine direkte (galvanische) Kontaktierung erforderlich.

Gemäß einer weiteren Ausgestaltung weist die Netzinfrastrukturkomponente eine Identifikationseinheit auf, die es erlaubt, die Netzinfrastrukturkomponente und jedes Kopplungsmodul und/oder jede Kontakteinheit eindeutig zu identifizieren.

Auf diese Weise ist auch in einem großen verteilten System, selbst bei (zunächst) unbekannter Topologie, jedes Teilelement eindeutig identifizierbar und ansprechbar. Somit können Zuordnungstabellen bzw. Protokolltabellen ohne manuelle Eingriffe erzeugt werden. Ein Monitoring von außen wird vereinfacht.

Die Aufgabe der Erfindung wird ferner gelöst durch ein verteiltes Verbundsystem zu Versorgungszwecken, das zum Transport eines Netzmediums auf einer Versorgungsebene ausgebildet ist, mit einer Mehrzahl gekoppelter Netzinfrastrukturkomponenten nach irgendeinem der vorherigen Aspekte.

Grundsätzlich liegen hinsichtlich der Wahl des Netzmediums keine Restriktionen vor. Das Netzmedium kann etwa elektrische Energie sein, wobei die Versorgungsebene insbesondere als Gleichspannungsnetz ausgebildet sein kann. Ein Gleichspannungsnetz empfiehlt sich insbesondere für Verbundsysteme, die zumindest teilweise durch elektrische Energiespeicher, insbesondere Akkumulatoren oder Batterieeinheiten, versorgt werden.

In alternativer Weise kann es sich bei dem Netzmedium etwa um Wasser, Gas, Pressluft, Öl, ebenso etwa auch um Energieformen wie Wärme, beispielsweise Wasserdampf oder Warmwasser, oder Kälte, beispielsweise Kaltluft, handeln.

Vorteilhaft kann das Verbundsystem eine nahezu beliebige Topologie ohne wesentliche Restriktionen aufweisen. Die Netzinfrastrukturkomponenten können etwa seriell, ringförmig, in Maschen oder in Mischformen miteinander verknüpft sein. Es ist besonders bevorzugt, wenn das Verbundsystem als vermaschtes Netz ausgeführt ist, also jede Netzinfrastrukturkomponente mit jeder anderen direkt oder indirekt verbunden ist. Es ist ferner von besonderem Vorteil, wenn zumindest teilweise redundante Verbindungen vorliegen. Mit anderen Worten ist es bevorzugt, wenn eine beliebige Netzinfrastrukturkomponente aus Sicht einer anderen Netzinfrastrukturkomponente auf mindestens zwei oder mehr möglichen Wegen erreicht werden kann.

Ein derartiges Verbundsystem kann in hohem Maße selbstinitialisierend und selbstkonfigurierend ausgestaltet sein. Diese Fähigkeit kann auch als "Ad-hoc" Funktionalität bezeichnet werden. Im Unterschied zu bekannten Smart Grid-Systemen kann auf eine zwingende übergeordnete Instanz zu Steuerungszwecken verzichtet werden. Die Möglichkeit zur Erfassung von Kenndaten einer zu koppelnden Funktionsgruppe erlaubt eine sogenannte "Plug and Play" Funktionalität. Neue Netzinfrastrukturkomponenten bzw. neue Funktionsgruppen können an ein laufendes Verbundsystem angekoppelt werden, ohne dass nachteilige Effekte, Störungen oder potentielle Bauteildefekte zu befürchten sind.

Gemäß einer Weiterbildung des Verbundsystems sind die Netzinfrastrukturkomponenten mit jeweils einer Funktionsgruppe koppelbar, die als Verbraucher, Versorger und/oder Speicher ausgebildet ist.

Die Kopplung kann grundsätzlich mittelbar oder unmittelbar erfolgen. Es versteht sich, dass auch eine Unterstruktur von Funktionsgruppen an die Netzinfrastrukturkomponenten angekoppelt werden kann, beispielsweise eine Kombination mehrerer Energiespeicher.

Es versteht sich, dass eine Funktionsgruppe gleichzeitig oder in zeitlicher Folge Eigenschaften eines Verbrauchers, Versorgers und/oder Speichers aufweisen kann.

Bei den Funktionsgruppen kann es sich etwa um Akkumulatoren, Batteriepacks, Generatoren, Motoren, Kondensatoren (etwa Supercaps), ferner jedoch auch um Monitoringeinheiten zu Überwachungszwecken handeln. Insbesondere dann, wenn sowohl Verbraucher als auch Versorger im System vorhanden sind, kann sich eine vollständige Autarkie hinsichtlich des Netzmediums ergeben, Es versteht sich jedoch auch, dass zumindest eine Funktionsgruppe dazu ausgebildet sein kann, das Verbundsystem mit einem weiteren Verbundsystem, etwa dem öffentlichen Stromnetz, zu koppeln.

Es versteht sich ferner, dass auch Funktionsgruppen vorgesehen sein können, die im Wesentlichen als "Verlängerung" ausgebildet sind. Hierbei ist es von besonderem Vorteil, wenn auch derartige Funktionsgruppen eine erweiterte Funktionalität bereitstellen. Dies kann darin bestehen, Kenndaten zur Verfügung zu stellen, die der Funktionsgruppe zugehörige Kabel und/oder Leiter beschreiben. Auf die Kenndaten kann etwa von einzelnen Netzinfrastrukturkomponenten und/oder vom Verbundsystem zugegriffen werden. Solche Kenndaten können etwa Leiterquerschnitte, Materialen für Leiter und/oder Isolation, Längen, Temperaturbeständigkeit, Chemikalienbeständigkeit oder ähnliches umfassen. Auf diese Weise kann das Verbundsystem etwa Kenntnis von Leitungswiderständen (spezifische Widerstände der Leiter), mechanischer Stabilität oder Ähnlichem erlangen und in die Steuerung und Regelung einfließen lassen.

Gemäß einer Weiterbildung des Verbundsystems ist zumindest eine Netzinfrastrukturkomponente zumindest temporär mit einem externen Monitoringsystem koppelbar, das eine Beobachtung und Erfassung von Betriebsparametern und Servicedaten erlaubt.

Ein Monitoringsystem bzw. Überwachungssystem kann eine Überwachung und Regelung von außen ermöglichen. Das Monitoringsystem kann etwa netzbasiert sein und einen Fernzugriff auf das Verbundsystem erlauben.

Gemäß einer weiteren Gestaltung umfasst das Verbundsystem ferner ein Leitungssystem zur Verbindung der gekoppelten Netzinfrastrukturkomponenten.

Es versteht sich, dass Leitungen körperlich-strukturell oder aber logischvirtuell ausgebildet sein können.

Gemäß einer Weiterbildung dieser Ausgestaltung weist das Leitungssystem ein Versorgungsnetz für das Netzmedium und ein Datennetz für Kommunikationsdaten auf.

In alternativer Weise ist es vorstellbar, etwa Kommunikationsdaten dem Netzmedium zu übertragen, beispielsweise mittels Modulation.

Gemäß einer Weiterbildung weist das Verbundsystem ferner ein Hilfsenergienetz auf, insbesondere ein Hilfsspannungsnetz.

In bevorzugter Weise weist das Verbundsystem zumindest eine Wandlereinheit zwischen einer Netzinfrastrukturkomponente und einer angekoppelten Funktionsgruppe auf, insbesondere einen Spannungswandler.

Die Wandlereinheit kann etwa durch einen Schaltregler, einen Gleichrichter, Wechselrichter, einen Transformator oder Ähnliches verkörpert sein.

Auf diese Weise können insbesondere Netzinfrastrukturkomponenten, die unterschiedliche Anforderungen an das Netzmedium stellen, im Verbundsystem vereinigt werden. Dies kann etwa auf Betriebsspannungen von Batterieeinheiten und elektrischen Verbrauchern zutreffen. Auf diese Weise kann etwa ein Verbraucher durch die zumindest eine Wandlereinheit von einer Batterieeinheit versorgt werden, die eine andere Nennspannung aufweist, die bei einer direkten Kopplung zu Schäden führen würde.

Grundsätzlich ist es bevorzugt, wenn das Netzmedium eine im Wesentlichen konstante Netzspannung aufweist, so dass Verbraucher und Einspeiser jeweils mittels einer Wandlereinheit zu adaptieren sind.

Gemäß einer weiteren Ausgestaltung stellt zumindest eine gekoppelte Funktionsgruppe des Verbundsystems eine auslesbare Darstellung von Kenndaten bereit, die der Steuereinrichtung einer der Netzinfrastrukturkomponenten zuführbar ist.

Dabei kann es sich etwa um eine Auflistung elektrischer Anschlussdaten für einzelne Funktionsgruppen handeln, die jeweils auf diesen hinterlegt ist.

In bevorzugter Ausgestaltung stellen die Netzinfrastrukturkomponenten eine integrierte Lastregelung für das gesamte verteilte Verbundsystem bereit.

Dabei kann es sich etwa um eine Spannungsregelung, eine Stromregelung oder eine kombinierte Regelung handeln. Die integrierte Lastregelung kann sich auf die Versorgungsebene und/oder die Hilfsspannungsebene beziehen.

Es ist besonders bevorzugt, wenn jede Kontakteinheit und jedes Kopplungsmodul jeder Netzinfrastrukturkomponente des Verbundsystems eindeutig identifizierbar ist.

Darüber hinaus ist es bevorzugt, wenn auch die Funktionsgruppen selbst eindeutig identifizierbar sind, beispielsweise mittels Identifikationsdaten, die bei den Kenndaten hinterlegt sind.

Gemäß einer Weiterbildung des Verbundsystems ist eine Mehrzahl von durch verschiedene Versorgungsleitungen verkörperten Versorgungsebenen vorgesehen, insbesondere eine Kombination aus Leitungen für elektrische Energie und Leitungen für thermische Energie.

Häufig geht die Erzeugung elektrischer Energie mit der Erzeugung von thermischer Energie einher. Somit können beide Energieformen durch das Verbundsystem bedarfsgerecht verteilt werden.

In alternativer Weise ist es vorstellbar, eine Versorgungsebene als Kühlmittelebene auszuführen, beispielsweise um Verbraucher, Energiespeicher oder sonstige Komponenten des Verbundsystems in einem Temperaturbereich zu betreiben, bei dem ein hoher Wirkungsgrad erzielt wird. Auch vor diesem Hintergrund kann es sich empfehlen, bei den Netzinfrastrukturkomponenten thermische Sensoren vorzusehen.

Gemäß einer weiteren Ausgestaltung ist beim Verbundsystem eine Mehrzahl von Funktionsgruppen vorgesehen, die mit einer Netzinfrastrukturkomponente gekoppelt sind und die als wiederaufladbare Energiespeicher ausgebildet sind, wobei das Verbundsystem ein Speichermanagement bereitstellt.

So sind etwa Maßnahmen vorstellbar, um die Energiespeicher möglichst gleichmäßig zu belasten. Beispielhaft kann angestrebt werden, auch bei einer Mehrzahl von Energiespeichern jeweils einen ähnlichen oder gleichen Ladezustand bzw. Entladezustand anzustreben. Das Verbundsystem erlaubt es, verschiedene Energiespeicher anzukoppeln, die sich etwa hinsichtlich ihrer Kenndaten und/oder hinsichtlich ihrer lebensdauerbedingten Leistungsfähigkeit unterscheiden. Eine Kombination aus Überwachung und aktiver Ansteuerung ermöglicht es, auch bei einem heterogenen Verbund von Energiespeichern maximale Leistung bereitzustellen.

Besonders bevorzugt ist eine Verwendung eines Verbundsystems nach einem der vorherigen Aspekte zum Antrieb eines Fahrzeugs mit einem zumindest teilweise elektrischen Antrieb.

Ferner ist die Verwendung eines der genannten Verbundsysteme als Versorgungssystem für regenerative Energien von Vorteil.

Auf diese Weise kann die gesamte Lieferkette, umfassend Erzeugung, Speicherung, Bereitstellung, Verteilung und Verbrauch, mittels einer integrierten Steuerung kontrolliert und geregelt werden.

Daneben empfiehlt sich die Verwendung eines der genannten Verbundsysteme zum Betrieb von netzunabhängigen Elektrowerkzeugen. Es versteht sich, dass auch eine im Wesentlichen autarke Versorgung von Elektrogeräten beliebiger Art erfolgen kann.

Eine weitere vorteilhafte Verwendung eines der genannten Verbundsysteme kann in der Verwendung als Pufferspeicher für Fremdnetze bestehen.

Insbesondere dann, wenn Wandlereinheiten vorgesehen sind, die etwa eine gegebene Fremdnetzspannungscharakteristik in eine systeminterne Spannungscharakteristik überführen können, kann das Verbundsystem universell eingesetzt werden. Insbesondere ist es nicht erforderlich, Systemkomponenten, etwa einzelne Netzinfrastrukturkomponenten oder Funktionsgruppen (wie etwa Energiespeicher), gezielt an das jeweilige Fremdnetz anzupassen. Es kann eine hohe Kompatibilität gewährleistet werden. Die Verwundung als Pufferspeicher kann Lastspitzen im Netz glätten und zu einer Verbesserung der Versorgungssicherheit beitragen. So kann die Pufferkapazität genutzt werden, um abhängig von Preis- und Nachfrageschwankungen Energie aus dem Fremdnetz zu entnehmen oder in dieses einzuspeisen.

Daneben ist auch eine Verwendung eines der genannten Verbundsysteme als Wechselstation zum Austausch von Energiespeichern von großem Vorteil.

Das Verbundsystem ist in weiten Grenzen skalierbar. Die Fähigkeit zur Selbstkonfiguration erlaubt ein "intelligentes " Management von Energiespeichern. Das Verbundsystem kann angekoppelte Energiespeicher erfassen und gezielt laden und/oder entladen. Somit können etwa entladene Energiespeicher an beliebigen Schnittstellen (Kopplungsmodulen) angekoppelt werden. Ein Ladevorgang kann regelbasiert und/oder hierarchiebasiert erfolgen und etwa bestimmte Energiespeicher bevorzugt bzw. nachrangig laden. Somit können einem Benutzer in kurzer Zeit priorisiert geladene Energiespeicher zur weiteren Verwendung angeboten werden.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung mehrerer bevorzugter Ausführungsbeispiele unter Bezugnahme auf die Zeichnungen. Es zeigen:
- Fig. 1: eine vereinfachte schematische gebrochene Darstellung eines Verbundsystems mit einer Mehrzahl von Netzinfrastrukturkomponenten;
- Fig. 2a - 2c: stark vereinfachte Darstellungen verschiedener Topologien von Verbundsystemen;
- Fig. 3: eine weitere vereinfachte schematische gebrochene Darstellung eines Verbundsystems;
- Fig. 4a -: 4c vereinfachte Prinzipdarstellungen verschiedener Konfigurationen einer Netzinfrastrukturkomponente;
- Fig. 5: eine vereinfachte schematische Darstellung eines Verbundsystems zu Versorgungszwecken;
- Fig. 6: eine vereinfachte schematische Darstellung eines weiteren Verbundsystems zu Versorgungszwecken;
- Fig. 7: eine schematische Darstellung einer Netzinfrastrukturkomponente;
- Fig. 8: eine stark vereinfachte schematische Ansicht einer an eine Netzinfrastrukturkomponente angekoppelten Funktionsgruppe mit einer Wandlereinheit;
- Fig. 9: eine stark vereinfachte Ansicht zweier miteinander verknüpfter Netzinfrastru ktu rkom ponenten;
- Fig. 10a, 10b: Diagramme betreffend Betriebsparameter des Verbundsystems;
- Fig. 11a: eine vereinfachte schematische Darstellung miteinander gekoppelter Netzinfrastrukturkomponenten, mit denen jeweils eine Funktionsgruppe gekoppelt ist;
- Fig. 11b, 11c: vereinfachte Diagramme mit möglichen Zeitverläufen von Lade- und Entladevorgängen;
- Fig. 12a, 12c: vereinfachte Diagramme mit Zeitverläufen einer charakteristischen Belastung und deren Aufteilung auf eine Mehrzahl von Speicherelementen; und
- Fig. 12b: Betriebsdatenblöcke von Energiespeichern, deren Charakteristik in den Fig. 12a und 12c diagrammatisch veranschaulicht wird.

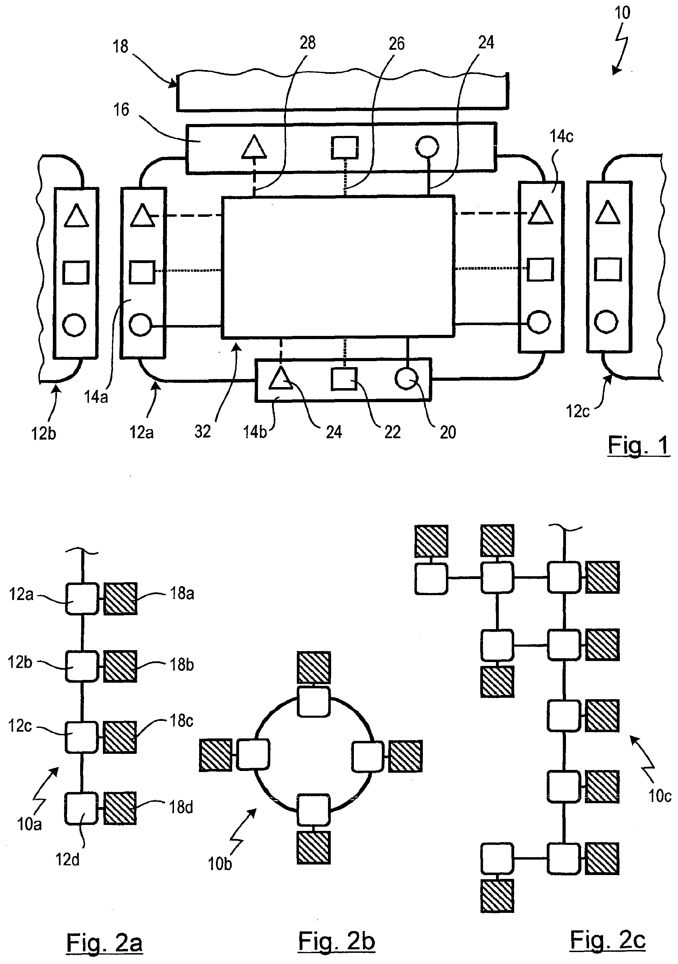

Fig. 1 zeigt eine vereinfachte schematische Darstellung eines Verbundnetzes 10, das eine Kopplung mehrerer Netzinfrastrukturkomponenten 12 aufweist. Die Netzinfrastrukturkomponente 12a ist schematisch dargestellt, mit dieser gekoppelte Netzinfrastrukturkomponenten 12b und 12c sind jeweils nur gebrochen ausschnittsweise abgebildet. Die Netzinfrastrukturkomponente 12a weist eine Mehrzahl von Kontakteinheiten 14a, 14b, 14c auf. Jede der Kontakteinheiten 14a, 14b, 14c ist dazu ausgebildet, die Netzinfrastrukturkomponente 12a mit einer weiteren Netzinfrastrukturkomponente 12 zu koppeln. Die Kopplung kann etwa direkt über Steckverbinder erfolgen. Ebenso ist es vorstellbar, Leitungsverbinder oder Ähnliches vorzusehen, insbesondere dann, wenn bei der Verknüpfung mehrerer Netzinfrastrukturkomponenten 12 räumliche Abstände zu überwinden sind. Es ist von besonderem Vorteil, wenn Leitungen, Kabel oder dgl. im Verbundsystem 10 "bekannt" sind, etwa um Kenntnis über deren spezifische Widerstände oder sonstige Kenndaten zu erlangen. Die Kontakteinheit 14b in Fig. 1 ist aktuell nicht belegt.

Es versteht sich, dass die Netzinfrastrukturkomponenten 12 (auch als Knoten bezeichnet) in baulicher und/oder logischer Weise strukturiert und definiert sein können. So können die Netzinfrastrukturkomponenten 12 beispielhaft als Steckmodule mit definierten Abmessungen ausgebildet sein, die verschiedene Kontaktierungen zur Verknüpfung aufweisen, vergleichbar etwa sogenannten Mehrfachsteckdosen oder Verteilerdosen.

Es ist jedoch auch vorstellbar, bei der Definition der Netzinfrastrukturkomponenten 12 etwa auch Leitungen, Kabelverbindungen oder Ähnliches hinzuzuzählen, so dass sich insgesamt eine größere geometrische Ausdehnung ergeben kann. Es versteht sich jedoch, dass die Netzinfrastrukturkomponenten 12 im Wesentlichen durch ihre funktionalen Strukturkomponenten und die Bereitstellung einer gewissen Funktionalität charakterisiert werden können. Insofern sollte nicht beschränkend lediglich auf eine äußere Gestaltung der Netzinfrastrukturkomponenten 12 abgestellt werden. Insbesondere können die zumindest eine Kontakteinheit 14 und das zumindest eine Kopplungsmodul 16 einer Netzinfrastrukturkomponente 12 voneinander räumlich beabstandet und mittels Leitungen verbunden sein, die ebenso der Netzinfrastrukturkomponente 12 zugeordnet sind. Dies wird dadurch ermöglicht, dass eine definierte Kommunikation zwischen den Elementen auf verschiedenen definierten Ebenen (Versorgungsebene, Datenebene, Hilfsspannungsebene; nachstehend näher erläutert) erfolgen kann.

Die Netzinfrastrukturkomponente 12 gemäß Fig. 1 weist ferner ein Kopplungsmodul 16 auf, an dem eine Funktionsgruppe 18 angekoppelt ist Die Funktionsgruppe 18 ist lediglich in geschnittener Darstellung angedeutet. Es versteht sich, dass bei der Netzinfrastrukturkomponente 12 ein oder mehrere Kopplungsmodule 16 vorgesehen sein können.

Beispielhaft ist die Netzinfrastrukturkomponente 12a dazu ausgebildet, auf einer Versorgungsebene 20, einer Datenebene 22 sowie optional auf einer Hilfsspannungsebene 24 zu kommunizieren. Dies kann etwa unter Einbeziehung von Versorgungsleitungen 26, Datenleitungen 28 und optional von Hilfsspannungsleitungen 30 erfolgen. Die Ebenen 20, 22 und 24 werden hier durch vereinfachte Symbole (Kreis, Rechteck, Dreieck) veranschaulicht.

Ferner kann die Netzinfrastrukturkomponente 12a eine Steuereinrichtung 32 aufweisen, die eine integrierte Regelung und Steuerung, insbesondere eine Lastregelung, zumindest auf der Versorgungsebene 20, bewerkstelligen kann.

Mit einer Mehrzahl von Netzinfrastrukturkomponenten 12 können Verbundsysteme 10 realisiert werden, die robust, flexibel erweiterbar und mit hoher Funktionssicherheit stabil und selbstregelnd betrieben werden können. Ein solches Verbundsystem 10 eignet sich insbesondere für mobile Anwendungen, da nicht notwendigerweise eine Verbindung mit stationären Versorgungsnetzen erforderlich ist.

Bei den Funktionsgruppen 18 kann es sich etwa um Energiespeicher, Stromerzeuger, Verbraucher und Ähnliches handeln. Diese können, jeweils gekoppelt an eine Netzinfrastrukturkomponente 12, grundsätzlich beliebig im Verbundsystem 10 angeordnet und verteilt sein.

Es ist besonders bevorzugt, wenn das Verbundsystem 10 elektrische Energie bereitstellt und insbesondere das Versorgungsnetz als Gleichstromnetz ausgebildet ist. In diesem Zusammenhang empfiehlt es sich, etwa mittels der Steuereinrichtung 32 eine Lastregelung im Verbundsystem 10 zu realisieren. Die Lastregelung kann etwa als Spannungsregelung ausgestaltet sein. Die Lastregelung kann etwa auf der Ebene einzelner Netzinfrastrukturkomponenten 12, jedoch auch auf der Ebene des gesamten Verbundsystems 10 erfolgen.

Die Kombination der Versorgungsebene 20 mit der Datenebene 22 erlaubt es, neben einem eigentlichen Netzmedium (beispielsweise elektrische Energie) auch Informationen zu transportieren und zu verteilen, um erweiterte Funktionalitäten bereitzustellen. Hierbei kann es sich etwa um Maßnahmen handeln, um die die Kompatibilität angekoppelter Funktionsgruppen 18 überprüfen und deren Kenndaten mit einer vom Verbundsystem 10 bereitgestellten Leistungsfähigkeit vergleichen. Somit lässt sich etwa gewährleisten, dass die Funktionsgruppe 18 sicher an das Verbundsystem 10 angeschlossen werden kann. Beispielsweise kann vorgeschrieben werden, die Funktionsgruppe 18 erst nach einer erfolgten Überprüfung und Abgleichung an die Versorgungsebene 20 anzubinden.

Es ist von besonderem Vorteil, dass sich ein solches Verbundsystem 10 auch bei gegebener hoher Gestaltungsfreiheit selbsttätig konfigurieren kann und insbesondere sämtliche miteinander verbundene Netzinfrastrukturkomponenten 12 und Funktionsgruppen 18 ermitteln kann, um etwa für Regelungs- und Steuerzwecke eine vorhandene Systemarchitektur (Topologie) mitsamt gegebener Randbedingungen und erforderlicher Betriebsparameter ermitteln zu können. Dies kann ohne übergeordnete starre Kontroll- und Regelstruktur erfolgen, bei der zumeist Bedienereingriffe zu Konfigurationszwecken erforderlich wären.

Im Gegensatz dazu kann das Verbundsystem 10 auch als sogenanntes Plug-and-Play-System betrieben werden. Das heißt, neue Netzinfrastrukturkomponenten 12 bzw. neue Funktionsgruppen 18 können einem bestehenden Verbundsystem 10 ohne größeren Aufwand hinzugefügt werden. Die neuen Komponenten können automatisch erkannt und eingebunden werden.

In den Fig. 2a, 2b und 2c sind beispielhaft verschiedene Topologien von Verbundsystemen 10a, 10b, 10c dargestellt, mit jeweils miteinander vermaschten Netzinfrastrukturkomponenten 12 sowie an diese gekoppelten Funktionsgruppen 18.

Fig. 2a zeigt eine linear aufgebaute Topologie, auch bezeichnet als serielle Topologie. In Fig. 2b ist eine Ringtopologie dargestellt. Schließlich zeigt Fig. 2c eine gemischte Topologie mit kombinierten Ring- und Busstrukturen. Aus Veranschaulichungsgründen wurde in den Fig. 2b und 2c auf eine explizite Benennung einzelner der Netzinfrastrukturkomponenten 12 und der Funktionsgruppen 18 verzichtet. Wie etwa in den Fig. 2a und 2c durch Bruchlinien angedeutet, können die Topologien ohne Weiteres auch Bestandteil größerer Strukturen sein. Weitere Topologien sind denkbar, etwa auch eine Sterntopologie.

Jede Netzinfrastrukturkomponente 12 kann etwa als Knoten bzw. als Router aufgefasst werden. Durch die Kombination der Versorgungsebene 20 mit zumindest der Datenebene 22 ist es ermöglicht, die Struktur der Versorgungsebene 20 zumindest mittelbar mittels der Datenebene 22 zu erfassen bzw. zu "kartographieren". Kenndaten und Identifikationsdaten können etwa in sogenannten Routing-Tabellen erfasst werden, die Routing-Protokollen konformen Spezifikationen entsprechen. Somit kann sowohl auf dem Niveau der einzelnen Netzinfrastrukturkomponenten 12 als auch auf dem (übergeordneten) Niveau des gesamten Verbundsystems 10 Routingfunktionalität bereitgestellt werden, also etwa ein kontrolliertes Leiten und Verzweigen von beispielsweise elektrischer Energie.

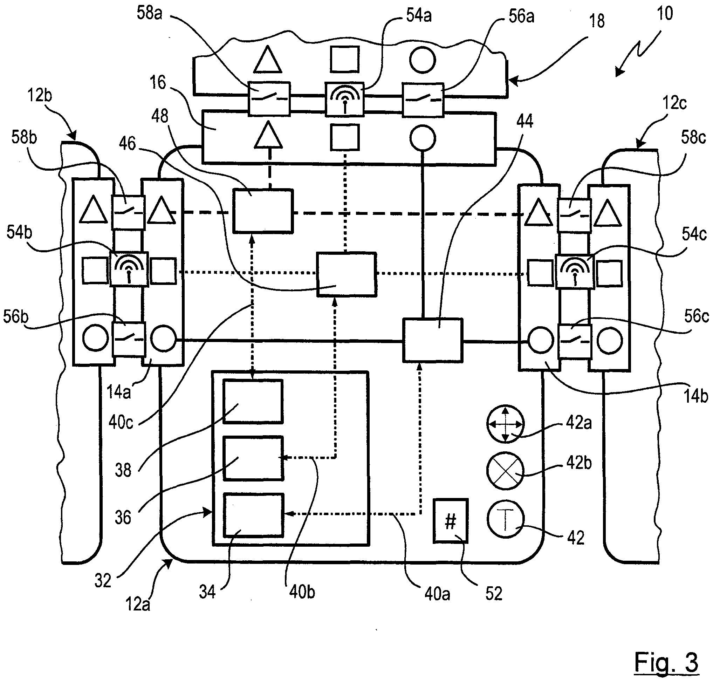

In Fig. 3 wird ein der Darstellung in Fig. 1 ähnlicher Ausschnitt eines Verbundsystems 10 gezeigt, bei dem eine Netzinfrastrukturkomponente 12a schematisch dargestellt ist. Die Netzinfrastrukturkomponente 12a ist mittels einer Kontakteinheit 14a mit einer weiteren Netzinfrastrukturkomponente 12b sowie mittels einer Kontakteinheit 14b mit einer weiteren Netzinfrastrukturkomponente 12c gekoppelt. Es versteht sich, dass die Netzinfrastrukturkomponenten 12c, 12b ähnlich oder identisch der Netzinfrastrukturkomponente 12a ausgestaltet sein können. Die Netzinfrastrukturkomponente 12a ist ferner mittels eines Kopplungsmoduls 16 mit einer Funktionsgruppe 18 verknüpft. Es versteht sich, dass auch eine Mehrzahl von Kopplungsmodulen 16 bei der Netzinfrastrukturkomponente 12a vorgesehen sein kann.

Beispielhaft weist die Steuereinrichtung 32 der Netzinfrastrukturkomponente 12a verschiedene Steuereinheiten 34, 36, 38 auf. Die Steuereinheit 34 kann dazu ausgestaltet sein, ein sich auf der Versorgungsebene 20 ergebendes Versorgungsnetz 44 zu überwachen, zu steuern und/oder zu regeln. Die Steuereinheit 36 kann dazu ausgebildet sein, ein sich auf der Datenebene 22 ergebendes Datennetz 46 zu überwachen, zu steuern und/oder zu regeln. Die Steuereinheit 38 kann dazu ausgebildet sein, ein sich auf der (optionalen) Hilfsspannungsebene 24 ergebendes Hilfsspannungsnetz 48 zu überwachen, zu steuern und/oder zu regeln. Es versteht sich, dass die Steuereinheiten 34, 36 und 38 durch diskrete, integrierte oder gar durch dieselben Bauelemente der Steuereinrichtung 32 umgesetzt sein können. Mittels spezifischer Steuerleitungen 40a, 40b, 40c kann die Steuereinrichtung selektiv auf das Versorgungsnetz 44, das Datennetz 46 und/oder das Hilfsspannungsnetz 48 zugreifen bzw. auf dieses eingreifen.

Die Steuereinrichtung 32 kann zumindest teilweise in den Aufbau der zumindest einen Kontakteinheit 14 und/oder des zumindest einen Kopplungsmoduls 16 integriert sein. Bei den Netzinfrastrukturkomponenten 12 kann ferner eine Datenspeichereinheit zum Speichern von Daten vorgesehen sein. Die Datenspeichereinheit kann der Steuereinrichtung 32 zugehörig oder aber mit dieser gekoppelt sein. Mittels der Datenspeichereinheit kann etwa eine aktuelle Konfiguration der Verbundeinheit 10 gesichert werden, etwa um (Wieder-) Inbetriebnahmen aus einem Aus-Zustand zu vereinfachen.

Die Netzinfrastrukturkomponente 12a weist ferner verschiedene Sensorelemente 42 auf, die zur Erfassung weiterer Betriebsparameter, dienen können beispielsweise von Umgebungsbedingungen. So kann etwa ein Beschleunigungssensor 42a vorgesehen sein, der dazu ausgebildet ist, stoßartige bzw. ruckartige Belastungen zu erkennen. Solche Belastungen können etwa auf mechanische Beschädigungen hinweisen, beispielsweise Stürze, Unfälle oder Ähnliches. Ein solches Sensorsignal kann genutzt werden, um im Falle einer potentiellen Gefahr selektive Eingriffe in das Verbundsystem 10 vorzunehmen. Dabei kann es sich etwa um gezieltes Abschalten bzw. "Auswerfen" von Funktionsgruppen 18 handeln.

Die Sensorelemente 42a, 42b, 42c können bei der zumindest einen Kontakteinheit 14 und/oder bei dem zumindest einen Kopplungsmodul 16 angeordnet sein. Eine integrierte Gestaltung ist denkbar. Auf diese Weise können auch angekoppelte Netzinfrastrukturkomponenten 12 und/oder Funktionsgruppen 18 bei der Werteerfassung berücksichtigt werden.

Ein weiteres Sensorelement 42b kann etwa als lichtempfindlicher Sensor ausgestaltet sein. Mittels des Sensorelements 42b können verschiedenste Funktionalitäten verwirklicht werden. Beispielhaft können dies eine Rauchdetektion bzw. Branddetektion, eine Belegt-oder-Frei-Erkennung, alternativ etwa jedoch auch eine Lichtstärkemessung sein, insbesondere im Verbund mit als Solarzellen ausgebildeten Funktionsgruppen. Verschiedene weitere Anwendungen sind denkbar.

Ein weiteres Sensorelement 42c kann etwa als Temperatursensor ausgebildet sein. Ein Temperatursensor kann zum Beispiel Umgebungstemperaturen ermitteln, dies kann insbesondere bei elektrischen Speichereinheiten, die unter schwankenden Umweltbedingungen betrieben werden, von Vorteil sein, um eine momentane Leistungsfähigkeit bestimmen zu können. Andere Nutzungsmöglichkeiten sind denkbar, beispielsweise die Überwachung von elektrischen Bauelementen, etwa der Steuereinrichtung 32, oder von Bauelementen der angekoppelten Funktionsgruppe 18.

Ferner weist die Netzinfrastrukturkomponente 12a eine Identifikationseinheit 52 auf, die es erlaubt, die Netzinfrastrukturkomponente 12a selbst, jedoch auch jede ihrer Kontakteinheiten 14a, 14b bzw. jedes Kopplungsmodul 16 eindeutig zu identifizieren. Es ist von besonderem Vorteil, wenn auch bei einer Vielzahl von miteinander gekoppelten Netzinfrastrukturkomponenten 12 jedes Teilelement eindeutig identifizierbar und ansprechbar ist. Auf diese Weise können Erfassungsfehler und Zuweisungsfehler bei der Steuerung und Lastregelung vermieden werden.

Mittels einer eindeutigen Identifikationsfolge kann jede Netzinfrastrukturkomponente 12 identifiziert werden, unabhängig ob sich deren Position im Verbundsystem 10 ändert, oder ob dem System weitere Komponenten hinzugefügt werden. Basierend auf den Identifikationsdaten können etwa Versorgungspfade, beispielsweise Strompfade, Datenpfade und Ähnliches, erkannt werden und der integrierten Steuerung des Verbundsystems 10 bekanntgemacht werden.

Eine Kontakteinheit 14 der Netzinfrastrukturkomponente 12 kann gewissermaßen eine netzinterne Verknüpfung (auch: Kontaktpunkt) verkörpern. Die zumindest eine Kontakteinheit 14 kann dazu ausgebildet sein, das Netzmedium im Versorgungsnetz 44, Daten im Datennetz 46 sowie Hilfsspannung im Hilfsspannungsnetz 48 definiert durchzuleiten. Dies kann in die jeweilige Netzinfrastrukturkomponente 12 hinein und/oder ausgehend von der Netzinfrastrukturkomponente 12 nach außen erfolgen. Die Kontakteinheit 14 kann als Schnittstelle fungieren.

Die erweiterte Funktionalität des Verbundsystems 10 kann zu einem gewissen Energiebedarf beim Aktivieren führen. Das Hilfsspannungsnetz 48 kann etwa dazu dienen, eine Grundversorgung bzw. eine initiale Energieversorgung bereitzustellen, um das Verbundsystem "hochfahren" zu können. Alternativ besteht die Möglichkeit, bei einer oder mehrerer der Netzinfrastrukturkomponenten 12 einen Hilfsenergiespeicher, beispielsweise eine Batterie, vorzusehen, um Hilfsenergie bereitzustellen. Alternativ kann ein (körperliches) Hilfsspannungsnetz 48 mit zugehörigen Hilfsspannungsleitungen 30 realisiert werden. Das Hilfsspannungsnetz 48 kann etwa für Kleinspannungen, beispielsweise etwa 5 V, 12 V oder Ähnliches, und insgesamt kleine Leistungen ausgebildet sein. Das Hilfsspannungsnetz 48 kann etwa für eine Stromentnahme von ungefähr 1 A ausgebildet sein.

Das Datennetz 46 dient im Wesentlichen dazu, Informationen zwischen beteiligten Komponenten, etwa zwischen mittelbar oder unmittelbar miteinander gekoppelten Netzinfrastrukturkomponenten 12, auszutauschen, um eine Informationsbasis für die Steuerung oder Regelung des Verbundsystems 10 zu schaffen und bereitzustellen. Bei den Daten kann es sich etwa um Betriebskenndaten, Betriebsparameter, Routingdaten bzw. Protokolldaten, Regeln, Vorschriften, Rechte, Grenzwerte, Auswahlmöglichkeiten, Identifikationsdaten und Ähnliches handeln, die etwa der aktuellen Netzinfrastrukturkomponente 12 zugeordnet sein können, jedoch auch benachbarten Netzinfrastrukturkomponenten 12 oder angekoppelten Funktionsgruppen 18 zuordenbar sind. Die eindeutige Identifikation vermeidet Fehlzuordnungen und kann dazu beitragen, Datenströme zu strukturieren.

Das Versorgungsnetz 44, etwa auch als Hauptspannungsnetz bezeichnet, kann grundsätzlich als elektrischer Verteiler ausgeführt sein, vergleichbar etwa bekannten Hausinstallationen und Verteilersystemen für Netzspannung, etwa für bekannte 230 V Netzwechselspannung.

Einem Kopplungsmodul 16 (etwa auch als Gateway bezeichnet) kommt die Aufgabe zu, einen eindeutigen Übergang zu Funktionsgruppen 18 bereitzustellen. Das Kopplungsmodul 16 kann ferner dazu ausgebildet sein, eine Hilfsspannung durchzuleiten, eine Datenverbindung bereitzustellen, und insbesondere das Netzmedium im Versorgungsnetz zwischen der Netzinfrastrukturkomponente 12 und der Funktionsgruppe 18 auszutauschen. Das Kopplungsmodul 16 kann ferner dazu ausgebildet sein, eine Anpassung, Begrenzung und Regelung von zu übertragenden Medien, insbesondere auf der Versorgungsebene 20 und der Datenebene 22, zu verwirklichen.

Das Kopplungsmodul 16 kann einen eindeutigen, ebenso eindeutig identifizierbaren, Übergang zu Energieverbrauchern, Erzeugern, Speichern sowie zu weiteren Strom- und Datennetzen bereitstellen. Dies kann etwa mittels eines normierten Stecksystems erfolgen. Durchflussmengen, also etwa entnommener oder eingespeister Strom, können laufend protokolliert werden.

Das zumindest eine Kopplungsmodul 16 kann ferner dazu ausgebildet sein, eine Datenübertragung nach außen bereitzustellen, also etwa das Datennetz 46 mittels netzgebundener oder drahtloser Technologien mit übergeordneten Hierarchien, etwa Servern, Netzanwendungen oder Ähnlichem, zu verknüpfen.

Bei der Verbindung einzelner Netzinfrastrukturkomponenten 12 im Netz sowie der Anbindung von Funktionsgruppen 18 an diese kann insbesondere bei paralleler Struktur des Versorgungsnetzes 44 sowie des Datennetzes 46 (und gegebenenfalls des Hilfsspannungsnetzes 48) von jeder Netzinfrastrukturkomponente 12 jeder angeschlossene Nachbar (also etwa weitere Netzinfrastrukturkomponenten 12 bzw. weitere Funktionsgruppen 18) mittelbar oder unmittelbar ermittelt werden.

In Fig. 3 ist ferner beispielhaft dargestellt, dass Schnittstellen 54, 56, 58 für die Ankopplung und Kommunikation der Netzinfrastrukturkomponente 12a mit jedem Nachbarn vorgesehen sein können. Beispielhaft kann es sich bei den Schnittstellen 54a, 54b, 54c um Datenschnittstellen handeln, die dem Datennetz 46 zugeordnet sind. Die Datenschnittstellen 54a, 54b, 54c können etwa drahtgebunden oder drahtlos verwirklicht werden. Gemäß einer bevorzugten Ausführungsform werden zur Kommunikation auf der Datenebene 22 zwischen zumindest zwei Netzinfrastrukturkomponenten 12 RFID-basierte Datenschnittstellen 54a, 54b, 54c genutzt. Die RFID-Technik erlaubt es etwa auch, passive Transponder einzusetzen und somit Daten mit Netzinfrastrukturkomponenten 12 auszutauschen, die (zumindest zeitweise) keine eigene Stromversorgung aufweisen. Zumindest eine Abfrage von Kenndaten und festen Betriebsparametern kann mittels passiver RFID-Transponder erfolgen.

Beispielhaft kann jede der Netzinfrastrukturkomponenten 12 zur bidirektionalen RFID-Kommunikation ausgebildet sein. Das bedeutet, eine Netzinfrastrukturkomponente 12 kann etwa bei einer Kontakteinheit 14 oder bei einem Kopplungsmodul 16 sowohl zur passiven (Transponder) als auch zur aktiven (Lesegerät) Datenabfrage ausgebildet sein. Abhängig von ihrer Stellung im Verbundsystem 10 kann die Netzinfrastrukturkomponente 12 somit auch bei noch nicht etablierter Stromversorgung (etwa auf der Hilfsspannungsebene 48) Daten zum Auslesen bereitstellen.

Besonders ist es bevorzugt, wenn die Funktionsgruppen 18 mit etwa mittels RFID-Technik realisierten Bereitstellungen von Kenndaten versehen sind. Dies ermöglicht es, vor der eigentlichen Verknüpfung auf der Versorgungsebene 20 Betriebsparameter und Kenndaten abzufragen und gegebenenfalls zu entscheiden, ob das etablierte Verbundsystem 10 die neu hinzuzufügende Funktionsgruppe 18 leistungsmäßig "verkraften" kann. Abhängig davon können etwa Ladeströme/Entladeströme oder dgl. angepasst werden. Ebenso ist es vorstellbar, die hinzuzufügende Funktionsgruppe 18 erst nach erfolgter Prüfung und Freigabe auf der Versorgungsebene 20 anzubinden. Dies kann etwa mittels eines Hardwareschalters und/oder eines Softwareschalters erfolgen.

Mittels der Steuereinrichtung 32 können verschiedenste, insbesondere administrative Funktionalitäten bei der Netzinfrastrukturkomponente 12 verwirklicht werden. Datenmäßig können in der Steuereinrichtung 32 etwa sogenannte Routing-Tabellen (Protokoll- bzw. Durchleittabellen) für Verbindungen im Versorgungsnetz 44, im Datennetz 46 bzw. im Hilfsspannungsnetz 48 erzeugt und hinterlegt werden. Ferner kann die Steuereinrichtung 32 dazu ausgebildet sein, einen sogenannte Datengateway für das Datennetz 46 bereitzustellen. Dies kann etwa protokollbasierte Datenleitungen und Datenverteilungen umfassen, der Datenaustausch kann zumindest mit einer weiteren Netzinfrastrukturkomponente 12 oder mit einer angekoppelten Funktionsgruppe 18 erfolgen, sich insbesondere jedoch auch auf das gesamte Verbundsystem 10 erstrecken. Neben den im Wesentlichen digital aufbereiteten Informationen auf der Datenebene 22 können ferner operationale Funktionsparameter erfasst werden. Diese können etwa physikalische Messwerte, Betriebsmodi, Operationsmöglichkeiten, Grenzwerte, Summenwerte und Ähnliches mit Beziehung auf Größen wie Strom, Spannung, Frequenz, Innenwiderstand von beteiligten Komponenten, Temperatur, Leistung, Energieumsatz und Ähnliches betreffen.

In Fig. 3 sind ferner verschiedene Schnittstellen 56 durch Schaltelemente 56a, 56b, 56c für die Versorgungsebene 20, auf der sich das Versorgungsnetz 44 erstreckt, dargestellt. Die Schaltelemente 56a, 56b, 56c können etwa als Hardwareschalter oder als Softwareschalter ausgebildet sein. Die Schaltelemente 56a, 56b, 56c können etwa durch von der Steuereinrichtung 32 bereitgestellte Schaltimpulse aktiviert und/oder deaktiviert werden. Dies bedeutet, dass etwa selbst dann, wenn weitere Netzinfrastrukturkomponenten 12 oder weitere Funktionsgruppen 18 bereits an die Netzinfrastrukturkomponente 12 (physisch) angesteckt sind, durch die Schaltelemente 56a, 56b, 56c noch eine galvanische Trennung realisiert sein kann, um potentielle Beschädigungen zu vermeiden, etwa bei Überlastungen.

In ähnlicher Weise können die Schaltelemente 56a, 56b, 56c auf der Hilfsspannungsebene 24 ausgestaltet sein. Auch hierbei kann es sich um Hardwareschalter und/oder Softwareschalter handeln.

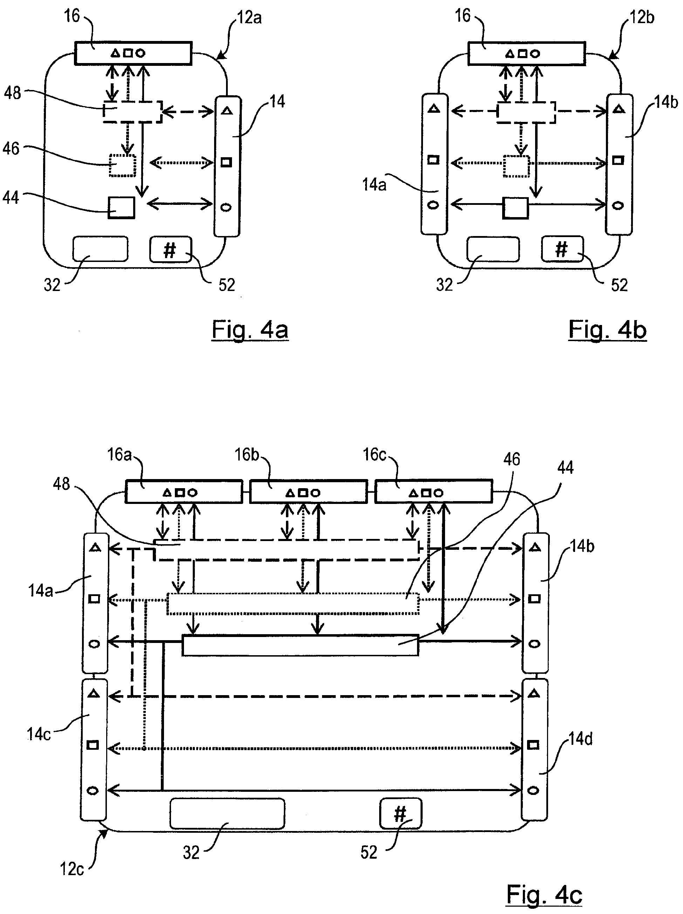

In den Fig. 4a, 4b, 4c sind drei verschiedene Konfigurationen von Netzinfrastrukturkomponenten 12a, 12b, 12c dargestellt, die in ihrer Grundfunktion den vorgenannten, im Zusammenhang mit Fig. 1 und 3 beschriebenen Netzinfrastrukturkomponenten 12 entsprechen können oder diesen zumindest ähnlich sein können. Jede der Netzinfrastrukturkomponenten 12a, 12b, 12c weist eine Steuereinrichtung 32 und eine Identifikationseinheit 52 auf. Die Netzinfrastrukturkomponenten 12a, 12b, 12c unterscheiden sich jedoch hinsichtlich der Anzahl realisierter Kontakteinheiten 14 bzw. Kopplungsmodule 16.

Beispielhaft ist die Netzinfrastrukturkomponente 12a in Fig. 4a mit jeweils einer Kontakteinheit 14 und einem Kopplungsmodul 16 versehen. Die Netzinfrastrukturkomponente 12b gemäß Fig. 4b weist hingegen ein Kopplungsmodul 16 und zwei Kontakteinheiten 14a, 14b auf. Die Netzinfrastrukturkomponente 12c ist weiter erweitert und beispielhaft mit drei Kopplungsmodulen 16a, 16b, 16c und vier Kontakteinheiten 14a, 14b, 14c, 14d versehen.

Es versteht sich, dass weitere Gestaltungen denkbar sind. Insbesondere ist es auch vorstellbar, dass die Netzinfrastrukturkomponenten 12 etwa modulartig erweiterbar sind. Auf diese Weise könnte etwa durch definierte Verknüpfung der notwendigen Komponenten, etwa der Steuereinrichtung 32, der Identifikationseinheit 52 sowie einer gewünschten Anzahl der Kontakteinheiten 14 bzw. der Kopplungsmodule 16, die erforderliche Funktionalität und Schnittstellenanzahl verwirklicht werden.

Wie etwa aus Fig. 4c ersichtlich, sind die jeweiligen Kontaktstellen des Versorgungsnetzes 44, des Datennetzes 46 bzw. des Hilfsspannungsnetzes 48 jeder der Kontakteinheiten 14 mit sämtlichen Kontaktstellen der jeweiligen Netzebene mit allen anderen Kontakteinheiten 14 sowie Kopplungsmodulen 16 verbunden. Es versteht sich, dass die Steuereinrichtung 32 selektiv in diese Verbindung eingreifen kann, um Zuschalt-, Abschalt- und/oder Regelvorgänge ausführen zu können.

Gemäß einer bevorzugten Ausführungsform kann das Versorgungsnetz 44 etwa mit Gleichspannung, insbesondere mit einer Gleichspannung von ungefähr 48 V, betrieben werden. Um die Stabilität des Versorgungsnetzes 44 gewährleisten zu können, empfiehlt es sich, etwa eine Spannungsregelung einzusetzen, die beispielsweise dazu ausgebildet ist, die Spannung ausgehend von der Referenzspannung, etwa 48 V, zumindest in einem Schwankungsbereich halten zu können. Der Schwankungsbereich kann etwa ±10 %, vorzugsweise ± 5 %, umfassen.

Beispielhaft ist es vorstellbar, für das gesamte Verbundsystem 10 einen (globalen) Regelbereich mit entsprechenden Kennwerten vorzusehen. Ebenso kann jedoch auch eine (kleinteilige) Regelung auf der Ebene einzelner Netzinfrastrukturkomponenten 12 vorgesehen werden.

Eine definierte Regelung bzw. Einstellung der an beteiligten Komponenten anliegenden Spannung kann einen Energietransfer bewirken, etwa zu Ladezwecken, Verbrauchszwecken und/oder Umschichtungszwecken. Aus einer Potentialdifferenz zwischen angekoppelten Funktionsgruppen 18 kann sich eine Stromrichtung ergeben. Somit wird etwa definiert, ob eine Batterieeinheit aufgeladen oder entladen werden soll. Wenn etwa mehrere Batterieeinheiten vorhanden sind, kann mittels verschiedener Soll-Spannungsniveaus priorisiert werden, welche Batterieeinheit als erstes zu laden oder zu entladen ist.

Eine Lastregelung kann auch eine Stromregelung, insbesondere mit einer Strombegrenzung, und/oder eine Variation eines Innenwiderstands, insbesondere zur stromabhängigen Spannungsreduzierung, umfassen.

Gemäß einer weiteren Ausführungsform können zur Ankopplung der Funktionsgruppen 18 an die Netzinfrastrukturkomponenten 12 des Verbundsystems 10 Wandlereinheiten zwischengeschaltet werden, die etwa dazu ausgebildet sind, eine Spannungswandlung durchzuführen. Auf diese Weise können etwa Funktionsgruppen 18, die Wechselspannung erfordern, an ein Gleichstromversorgungsnetz angeschlossen werden. Ebenso ist es vorstellbar, auf Gleichstrom basierende Funktionsgruppen 18 mittels einer Wandlereinheit an das Verbundsystem 10 anzukoppeln. Dies kann etwa dann der Fall sein, wenn die Funktionsgruppen 18 ein anderes Spannungsniveau erfordern, also etwa abweichend von einer Nennspannung von beispielsweise 48 V.

Diese Maßnahme hat den Vorteil, dass verschiedenste Energiespeicher, Energieerzeuger und Energieverbraucher über das Verbundsystem 10 miteinander gekoppelt werden können. So ist es beispielsweise vorstellbar, verschiedene Batterieeinheiten, deren Kenndaten sich insbesondere hinsichtlich des Spannungsniveaus unterscheiden, über das Verbundsystem 10 zu verknüpfen, um deren Gesamtenergie oder Gesamtkapazität nutzen zu können.

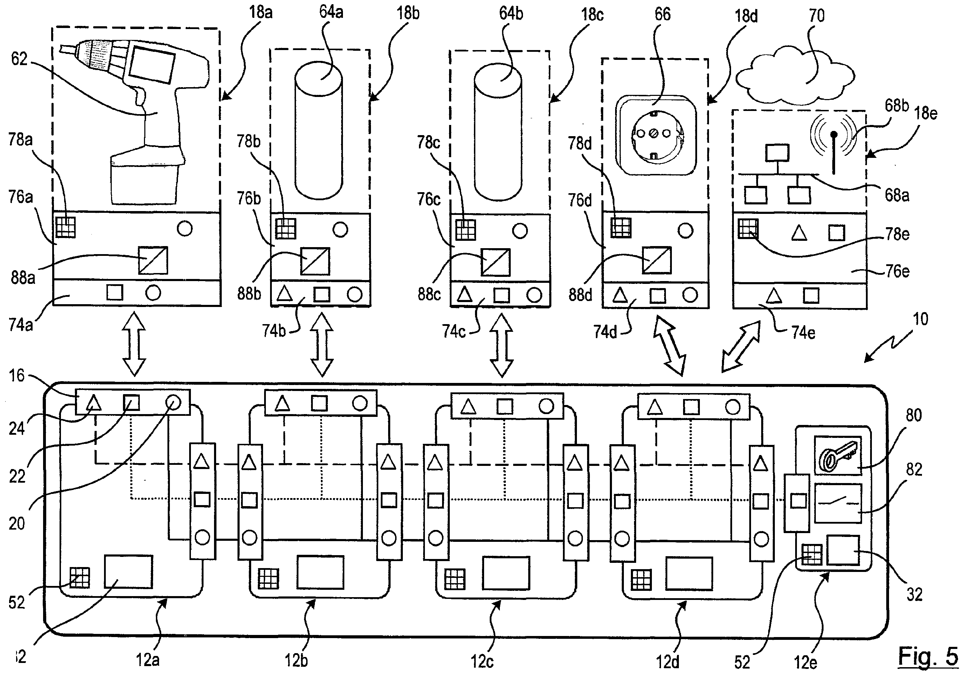

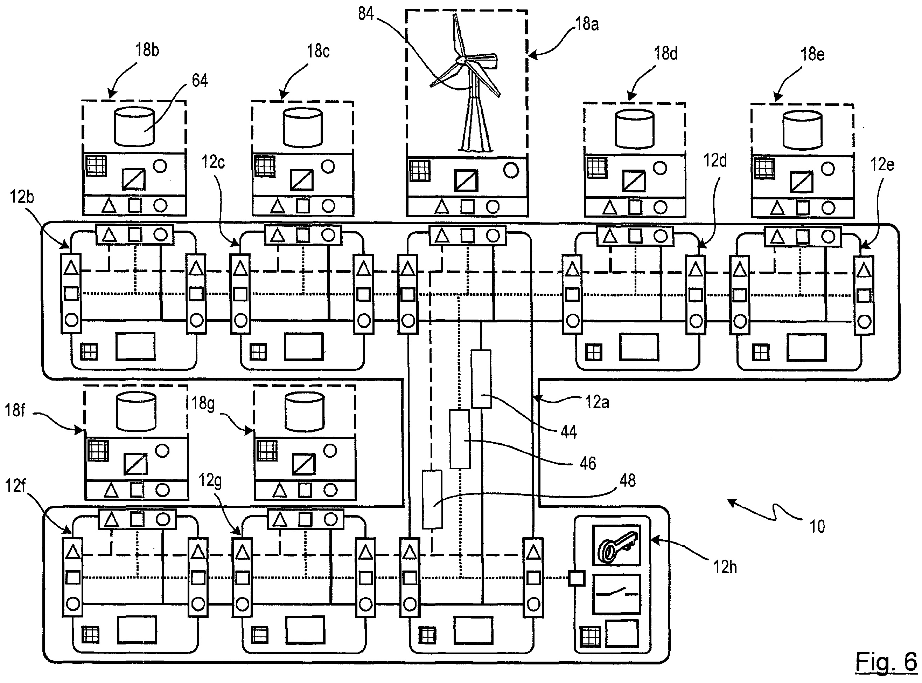

In den Fig. 5 und 6 werden mögliche Ausgestaltungen von Verbundsystemen 10 schematisch dargestellt.

Fig. 5 zeigt eine Anwendung, bei der das Verbundsystem 10 in erster Linie dazu genutzt wird, ein netzunabhängiges Elektrowerkzeug 62 mittels Energiespeichern 64 anzutreiben. Das Ausführungsbeispiel gemäß Fig. 6 zeigt hingegen eine Zusammenschaltung eines Energieerzeugers in Form eines Windkraftrads 84 mit einer Mehrzahl von Energiespeichern 64.

Bei dem Verbundsystem 10 gemäß Fig. 5 ist eine Mehrzahl von Funktionsgruppen 18 über eine Mehrzahl von Netzinfrastrukturkomponenten 12 miteinander verknüpft. Die Funktionsgruppe 18a kann beispielsweise durch ein Elektrowerkzeug 62 verkörpert sein. Derartige Elektrowerkzeuge 62, beispielsweise sogenannte Akkuschrauber bzw. Akkubohrer, sind im Stand der Technik bekannt. Nachteilig bei derartigen Geräten ist häufig das Erfordernis eines proprietären Energiespeichersystems. Eine Nennspannung bekannter Energiespeichersysteme kann etwa 36 V betragen. Aus Veranschaulichungsgründen sind in Fig. 5 miteinander gekoppelte Netzinfrastrukturkomponenten 12 und Funktionsgruppen 18 abstrakt mittels Blockpfeilen miteinander verknüpft dargestellt. Es versteht sich, dass die Ankopplung grundsätzlich logischer und/oder diskret-struktureller Art sein kann. Insbesondere ist es nicht unbedingt erforderlich, dass jede Kopplung zwischen einer Netzinfrastrukturkomponente 12 und einer Funktionsgruppe 18 (beliebig) lösbar ist.

Bei dem Verbundsystem 10 gemäß Fig. 5 erfolgt das (Energie-) Speichermanagement durch die miteinander gekoppelten Netzinfrastrukturkomponenten 12a, 12b, 12c, 12d und 12e. Eine erste Funktionsgruppe 18a, der das Elektrowerkzeug 62 zugeordnet ist, ist mit der Netzinfrastrukturkomponente 12a verknüpft. Eine weitere Funktionsgruppe 18b, der ein Energiespeicher 64a zugeordnet ist, ist mit der Netzinfrastrukturkomponente 12b verknüpft. Eine noch weitere Funktionsgruppe 18c, der ein Energiespeicher 64b zugeordnet ist, ist mit der Netzinfrastrukturkomponente 12c verknüpft.

Die Netzinfrastrukturkomponente 12d ist hingegen mit zwei Funktionsgruppen 18d, 18e gekoppelt. Die Funktionsgruppe 18d weist beispielhaft eine Kontaktierung mit einer Energiequelle 66 auf, etwa mit einem haushaltsüblichen Netzanschluss. Ein derartiger Netzanschluss 66 kann Energie bereitstellen, etwa um das Versorgungsnetz 44 zu speisen. Darüber hinaus kann regelmäßig keine weitere Funktionalität bereitgestellt werden. Hingegen ist die Funktionsgruppe 18e vorrangig dazu ausgerichtet, Datenverbindungen mit übergeordneten Instanzen, etwa einem netzbasierten Monitoringsystem 70, zu ermöglichen. Zu diesem Zweck kann die Funktionsgruppe 18e alternativ oder parallel etwa eine leitungsgebundene Kommunikationsanbindung 68a oder eine drahtlose Kommunikationsanbindung 68b bereitstellen. Dabei kann es sich grundsätzlich um bekannte Netzwerktechnologien handeln, beispielsweise LAN-Technologien oder WLAN-Technologien.

Funktionsgruppenseitig kann den jeweiligen Kopplungsmodulen 16 (vgl. etwa Fig. 1 und Fig. 3) der Netzinfrastrukturkomponenten 12a bis 12d jeweils eine Koppeleinheit 74a, 74b, 74c, 74d, 74e zugeordnet sein. Die Koppeleinheit 74a kann etwa als Stecker ausgestaltet sein. Abhängig von der Funktionalität bzw. des Gerätebedarfs auf Seiten der Funktionsgruppen 18 können die Koppeleinheiten 74 etwa dazu ausgebildet sein, sowohl auf der Versorgungsebene 20, der Datenebene 22 als auch auf der Hilfsspannungsebene 24 mit den Netzinfrastrukturkomponenten 12 zu kommunizieren. Es kann jedoch auch möglich sein, dass auf lediglich einer oder zweien der Ebenen 20, 22, 24 eine Kommunikation stattfindet. So ist beispielsweise die Koppeleinheit 74a dazu ausgebildet, auf der Datenebene 22 und der Versorgungsebene 20 Verbindungen herzustellen. Dies kann etwa darauf zurückgehen, dass das anzukoppelnde Elektrowerkzeug 62 nicht dazu ausgebildet ist, mittels einer Hilfsspannung auf der Hilfsspannungsebene 24 angesprochen zu werden.

Für das Verbundsystem 10 bzw. die mit der Funktionsgruppe 18a unmittelbar gekoppelte Netzinfrastrukturkomponente 12a kann eine auf diesen Umstand verweisende Information etwa in Kenndaten 78a hinterlegt sein, die auf einer inneren Funktionsebene 76a der Funktionsgruppe 18a hinterlegt sind. Derartige Kenndaten können Identifikationsdaten, Betriebsparameter, Minimal- und Maximalwerte und Ähnliches umfassen. Die Kenndaten 78a können etwa durch die Steuereinrichtung 32 der Netzinfrastrukturkomponente 12a über die Datenebene 22 abgefragt werden. Auf diese Weise kann die Steuereinrichtung 32 in Erfahrung bringen, was für eine Art Funktionsgruppe 18a angekoppelt ist und/oder angekoppelt werden soll. In gleicher Weise können etwa auch die Funktionsgruppen 18b, 18c, die die Energiespeicher 64a, 64b umfassen, auf inneren Funktionsebenen 76b, 76c Kenndaten 78b, 78c bereithalten, die von den Netzinfrastrukturkomponenten 12b, 12c oder alternativ vom Verbundsystem 10 insgesamt abgefragt und ausgewertet werden können.

Wie bei den Koppeleinheiten 74b, 74c angedeutet, können die Energiespeicher 64a, 64b auf allen drei Ebenen, der Versorgungsebene 20, der Datenebene 22 und der Hilfsspannungsebene 24, kontaktiert werden. Auf diese Weise kann jeder der Energiespeicher 64a, 64b etwa eine Hilfsspannung bereitstellen, die über das Hilfsspannungsnetz 48 im Verbundsystem 10 verteilbar ist. Durch die Hilfsspannung können beispielhaft die Steuereinrichtungen 32 der Netzinfrastrukturkomponenten 12 mit einer Betriebsspannung versorgt werden.

Die der Funktionsgruppe 18d zugeordnete Energiequelle 66 kann grundsätzlich auch Kenndaten 78d auf einer inneren Funktionsebene 76d bereitstellen. Dies mag etwa bei üblichen Haushaltssteckdosen nicht der Fall sein. Es gibt jedoch erste Ansätze, auch solche Schnittstellen zu Energiequellen mit etwa mittels RFID-Technik auslesbaren Kenndaten 78d zu versehen, etwa um eine Identifikation oder das Auslesen bestimmter Betriebsparameter zu erlauben.

Die Funktionsgruppe 18e dient vorrangig zum Datenaustausch, insbesondere zu Monitoringzwecken. Aus diesem Grund ist keine Verknüpfung auf der Versorgungsebene 20 mit der Funktionsgruppe 18e beabsichtigt. Gleichwohl kann die Funktionsgruppe 18e etwa auf der Hilfsspannungsebene 24 kontaktiert werden, etwa um die Kommunikationsanbindungen 68a, 68b mit Energie zu versorgen.

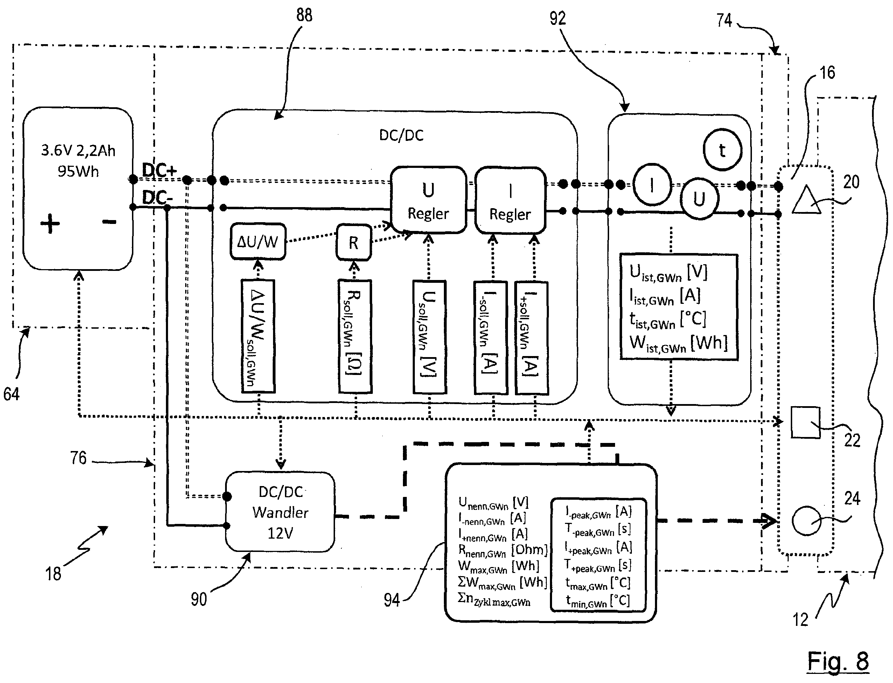

Es versteht sich, dass den Funktionsebenen 76 der Funktionsgruppen 18 weitere Einrichtungen zugehörig sein können, insbesondere Wandlereinheiten 88a, 88b, 88c, 88d zur Spannungsanpassung. Hierauf wird nachfolgend insbesondere im Zusammenhang mit Fig. 8 näher eingegangen.

Das Verbundsystem 10 gemäß Fig. 5 weist ferner mit der Netzinfrastrukturkomponente 12e eine Einheit auf, die vorrangig der Zugriffskontrolle dient. Zu diesem Zweck kann die Netzinfrastrukturkomponente 12e etwa neben der Steuereinrichtung 32 und der Identifikationseinheit 52 ferner eine Authentifikationseinheit 80 sowie eine Zugriffsverwaltungseinheit 82 aufweisen.

Ziel der Netzinfrastrukturkomponente 12e ist somit vorrangig nicht die Bereitstellung eines (primären) Netzmediums auf der Versorgungsebene 20, sondern eine Zugriffskontrolle für das Verbundsystem 10. Die Authentifikationseinheit 80 kann etwa ein Schlüsselsystem oder ein Passwortsystem umfassen. Besonders bevorzugt ist es, wenn die Authentifikationseinheit 80 ein Lesegerät, insbesondere ein RFID-Lesegerät, umfasst. Ein derartiges Lesegerät kann dazu ausgebildet sein, Schlüsseldaten, die beispielsweise auf einem RFID-Transponder hinterlegt sind, auszulesen. Auf Basis eines auf dem Transponder hinterlegten Schlüssels kann die Rolle eines Benutzers bestimmt werden. Hiervon ausgehend können dem Benutzer mittels der Zugriffsverwaltungseinheit 82 bestimmte Rollen zugewiesen werden. Auf diese Weise können verschiedenen Nutzergruppen verschiedene Rechte zugeordnet werden. Es versteht sich, dass der Netzinfrastrukturkomponente 12e entgegen der Darstellung in Fig. 5 beispielsweise Hilfsenergie auf der Hilfsspannungsebene 24 zugeführt werden kann.

Das in Fig. 6 dargestellte Verbundsystem 10 weist einen grundsätzlich der Darstellung in Fig. 5 ähnlichen Aufbau auf.

Das Verbundsystem 10 in Fig. 6 dient der Verknüpfung eines Energieerzeugers, etwa einer Windkraftanlage 84, mit einer Mehrzahl von Energiespeichern 64. Der Energieerzeuger 84 ist der Funktionsgruppe 18a zugeordnet. Die Energiespeicher 64 sind den Funktionsgruppen 18b, 18c, 18d, 18e, 18f, 18g zugeordnet. Die Funktionsgruppen 18 sind miteinander durch die Netzinfrastrukturkomponenten 12a, 12b, 12c, 12d, 12e, 12f, 12g verknüpft. Die Verknüpfung kann, funktionsgruppenabhängig, das Versorgungsnetz 44, das Datennetz 46 und/oder das Hilfsspannungsnetz 48 umfassen. Die Netzinfrastrukturkomponente 12h dient etwa, ähnlich der Netzinfrastrukturkomponente 12e in Fig. 5, vorrangig Authentifikations- und Zugriffsverwaltungszwecken.

Es versteht sich, dass auch das Verbundsystem 10 gemäß Fig. 6 über eine Kommunikationsanbindung verfügen kann, die eine Verbindung mit externen Monitoringsystemen bereitstellen kann, vgl. hierzu auch Fig. 5.

Die in den Fig. 5 und 6 skizzenhaft dargestellten modulartig aufgebauten Verbundsysteme 10 erlauben jeweils die Verknüpfung eigentlich nicht miteinander kompatibler Funktionsgruppen. Auf diese Weise kann sich insbesondere auf dem Gebiet der Erzeugung und Speicherung regenerativer Energien bzw. auf dem Gebiet der Elektromobilität sowie allgemein bei Anwendungen mit netzunabhängig operierenden Verbrauchern eine höhere Flexibilität ergeben.

Es versteht sich, dass etwa das Verbundsystem gemäß Fig. 5 lediglich temporär mit der Energiequelle 66 verbunden ist, insbesondere dann, wenn die Energiespeicher 64 aufzuladen sind.

Ferner ist es von Vorteil, wenn jedes der Kopplungsmodule 16 der in den Verbundsystemen 10 verknüpften Netzinfrastrukturkomponenten 12 aufzeichnen und kommunizieren kann, welche Strommengen dieses passiert haben. Auf diese Weise kann etwa ein Abrechnungs- und Vergütungsmodell realisiert werden.

Wie vorstehend bereits erwähnt, erlaubt es die gemeinsame Realisierung der Versorgungsebene 20 und der Datenebene 22, verschiedenste Erzeuger, Speicher und Verbraucher miteinander zu verknüpfen, ohne dass Nachteile oder Schäden für das Verbundsystem 10 zu befürchten sind. Die Kommunikation auf der Datenebene 22 erlaubt es, Charakteristika angeschlossener Funktionsgruppen 18 zu ermitteln und somit Durchflüsse, Gesamtleistungen, Kapazitäten und Ähnliches zu erfassen und/oder zu antizipieren. Auf diese Weise können mit nur einem Konzept verschiedene Leistungsklassen abgedeckt werden. Insbesondere ist ein solches Verbundsystem 10 offen für zukünftige Leistungsanpassungen.

Bei dem Verbundsystem 10 gemäß Fig. 5 kann eine Aufladung der Energiespeicher 64 etwa durch einen Wandler (vgl. Wandlereinheiten 88) bewirkt werden, der etwa der Energiequelle 66 und der Netzinfrastrukturkomponente 12d zwischengeschaltet ist. Die weitere Verteilung des Ladestroms kann netzintern durch die Netzinfrastrukturkomponenten 12 bewerkstelligt werden.

Es versteht sich ferner, dass das Elektrowerkzeug 62 unter Zwischenschaltung des Verbundsystems 10 auch "netzgebunden" betrieben werden kann, wenn die Netzinfrastrukturkomponente 12d aktiv mit der Funktionsgruppe 18d gekoppelt ist. Dabei kann durch verschiedene Wandlereinheiten 88 eine Umwandlung etwa einer Netz(Wechsel-) Spannung in eine Nennspannung für das Verbundsystem 10 und anschließend in eine für das Elektrowerkzeug 62 erforderliche Nennspannung erfolgen. Darüber hinaus können die Energiespeicher 64 eine eigene spezifische Nennspannung aufweisen, wofür korrespondierende Wandlereinheiten 88 vorgesehen sein können.

Mittels einer bei den jeweiligen Netzinfrastrukturkomponenten 12 vorgesehenen spezifischen Spannungsregelung können Stromflüsse im gesamten Verbundsystem 10 gesteuert werden. Auf diese Weise können beispielsweise einzelne Energiespeicher 64 mit hoher oder niedriger Priorität geladen und/oder entladen werden. Dies kann in der Praxis verschiedene Vorteile bringen. So etwa dann, wenn das Verbundsystem 10 beispielsweise als Akkuladestation dient, wobei aufgeladene Energiespeicher 64 einer externen Verwendung zuführbar sind. Bei derartigen Anwendungen kann eine gezielte Priorisierung erlauben, dass stets nur gefüllte Energiespeicher 64 ausgetauscht werden.

Wie vorstehend bereits erwähnt, können die Kopplungsmodule 16 der Netzinfrastrukturkomponenten 12 dazu ausgebildet sein, verschiedene Daten zu erfassen. Dabei kann es sich etwa um eine Auswahl aus den folgenden möglichen physikalischen Werten handeln, die in Tabelle 1 dargestellt sind:

| Kopplungsmodul (Gateway) Dauerbelastbarkeit | Kopplungsmodul (Gateway) Spitzengrenze | Soll Regelwert einstellbar | Ist Messwert Kopplungsmodul (Gateway) | Summenwerte Kopplungsmodul (Gateway) |
|---|---|---|---|---|
| U_{nenn,GWn} [V] Nennspannung I_{-nenn,GWn} [A] Stromentnahme der Gateway aus dem Netz I₊ₙₑₙₙ,_{GWn} [A] Stromeinspeisung der Gateway in das Netz R_{nenn,GWn} [Ohm] Innenwiderstand W_{max,GWn} [Wh] Speicherbare Energie pro Zyklus in der Gateway ΣW_{max,Gwn} [Wh] Speicherbare Energie auf Lebensdauer in der Gateway Σn_{zykl max}, _{GWn} Anzahl der Zyklen auf Lebenszeit | I_{.peak,GWn} [A] T_{-peak,Gwn} [s] Max Spitzenstrom bei der Entnahme mit Zeitangabe I_{+peak,GWn} [A] T_{+peak,GWn} [s] Max Spitzenstrom bei der Einspeisung mit Zeitangabe t_{max,Gwn} [°C] Temperatur Maximum t_{min,GWn} [°C] Temperatur Minimum | U_{soll,GWn} [V] Sollspannung I_{-soll,GWn} [A] Max. Stromentnahme der Gateway aus dem Netz I_{+soll,GWn} [A] Max. Stromeinspeisung der Gateway in das Netz R_{soll,GWn} [Ohm] Innenwiderstand ΔU/W_{soll,GWn} [V/100%] SpannungsDifferenz zu Ladefüllung SOC | U_{ist,GWn} [V] Aktuelle Spannung am Netzknoten I_{ist,GWn} [A] Aktueller Strom zwischen Gateway und Netz. Positiv -> Einspeisung Negativ -> Entnahme t_{ist,GWn} [°C] Temperatur Gateway W_{ist,GWn} [Wh] Aktuell gespeicherte Energie in der Gateway T_{-ist,GWn}[S] Aktuelle Laufzeit bis zur Entladung der Gateway T_{+ist,GWn}[S] Aktuelle Laufzeit bis zur Vollladung der Gateway G_{ist,GWn} [%] Aktueller Gewichtungswert für Gewichtete Energie SOH_{istGwn} [%] Gesundheitszustand der Gateway | Σ**W**_{-ist,GWn}[Wh] Summen Zähler entnommene Energie der Gateway aus dem Mesh Σ**W**_{-ist gewicht,GWn} [Wh] Summen Zähler entnommene Energie der Gateway Gewichtet Σ**W**_{+ist,GWn}[Wh] Summen Zähler eingespeiste Energie der Gateway in das Mesh Σ**W**_{+ist ge-wicht,GWn}[Wh] Summen Zähler eingespeiste Energie der Gateway gewichtet ΣT_{+ist,Gwn} [h] Betriebs- Stundenzähler Ladung Gateway ΣT_{-ist,Gwn} [h] Betriebs- Stundenzähler Entladung Gateway n_{zykl ist,GWn} Anzahl der Zyklen |

In Tabelle 1 bezeichnet der Begriff "Gateway" beispielhaft ein Kopplungsmodul 16. Begriffe wie "Netz" oder "Mesh" beziehen sich insbesondere auf das Versorgungsnetz 44. Der Begriff "Netzknoten" kann einer Kontakteinheit 14 gleichgesetzt werden.

Die in Tabelle 1 gezeigten Sollwerte können etwa als Zielgrößen für die Lastregelung genutzt werden, wobei beispielsweise erlaubte Bandbreiten angegeben werden können.

Nachfolgend zeigt Tabelle 2 beispielhafte physikalische Werte, die beim Aufbau, Betrieb und bei der Überwachung und Steuerung des Verbundsystems 10, einzelner Netzinfrastrukturkomponenten 12 sowie einzelner Kontakteinheiten 14 und/oder Kopplungsmodule 16 genutzt werden können.

| Verbundsystem (Mesh) Kontakte | Steckverbinder Belastbarkeit | Soll Regelwert benachbarte Netzinfrastruktur-komponente (Nachbarknoten) | Ist Messwert | Summenwerte Grenzen |
|---|---|---|---|---|
| n_{K,Kn} Anzahl aller folgenden Knoten am Kontaktpunkt K1, K2...Kn n_{KAR,Kn} Anzahl der aktiven und regelbaren Knoten am Kontaktpunkt K1, K2...Kn n_{KP,Kn} Anzahl der passiven bzw. deaktivierten Knoten am Kontaktpunkt K1, K2...Kn n_{KA,Kn} Anzahl der aktiven Knoten am Kontaktpunkt K1, K2...Kn | I_{nenn,Kn} [A] Max. Stromübertragung am Steckverbinder K1, K2...Kn I_{peak,Kn} [A] T_{Peak,Kn} [s] Max. Spitzenstrom- Übertragung am Steckverbinder K1, K2, K3...Kn t_{max,Kn} [°C] Temperatur Maximum am Steckverbinder K1, K2, K3...Kn | ΔU_{soll,Kn} [%] Prozentuale Reduzierung bzw. Erhöhung der Sollspannung des Nachbarknotens an K1, K2, K3...Kn Δl_{-soll,Kn} [%] Prozentuale Reduzierung der maximalen Stromentnahme des Knotens aus dem Nachbarknoten ΔI_{+soll,Kn} [%] Prozentuale Reduzierung der maximalen Stromeinspeisung des Knotens aus dem Nachbarknoten ΔR_{soll,Kn} [%] Prozentuale Änderung des Innenwiderstand des Nachbarknoten | U_{ist,Kn} [V] Aktuelle Spannung am Kontaktpunkt I_{ist,Kn} [A] Aktueller Strom an K1, K2, K3....Kn Positiv -> Stromfluss zum Nachbar Kontaktpunkt, Negativ -> Stromfluss zum eigenen Knoten W_{ist,Kn} [Wh] Aktuell gespeicherte Energie am Kontaktpunkt T_{-ist,Kn}[s] Aktuelle Restzeit für Entladung am Kontaktpunkt K1, K2...Kn T_{+ist,Kn} [s] Aktuelle Restzeit für Ladung am Kontaktpunkt K1, K2...Kn t_{ist,Kn} [C°] Temperatur am Steckverbinder K1, K2...Kn | ΣI-_{nenn,Kn} [A] Summe der möglichen Stromentnahme aus dem Kontaktpunkt an K1, K2... Kn ΣI_{+nenn,Kn} [A] Summe der möglichen Stromeinspeisung in dem Kontaktpunkt an K1, K2... Kn ΣI_{-peak,Kn} [A] ΣT_{-peak,Kn} [s] Summe der möglichen Spitzen-Stromentnahme aus dem Kontaktpunkt an K1, K2... Kn ΣI_{+peak,Kn} [A] ΣT_{+peak,Kn} [s] Summe der möglichen Spitzen-Stromeinspeisung in den Kontaktpunkt an K1, K2... Kn W_{max,Kn} [Wh] Summe der Speicherbaren Energie am Kontaktpunkt K1, K2... Kn |

In Tabelle 2 kann unter einem Knoten etwa eine Netzinfrastrukturkomponente 12 aufgefasst werden. Die übrigen Konventionen können denen im Zusammenhang mit Tabelle 1 bereits erwähnten Konventionen entsprechen. Beispielhaft können anstatt absoluter Größen an einzelnen Kontakteinheiten 14 zwischen benachbarten Netzinfrastrukturkomponenten 12 relative Sollwertveränderungen übergeben werden. Eine derartige Darstellung kann dazu beitragen, einen notwendigen Datenfluss zu minimieren.

Bei Erfassung und Überwachung aller erforderlichen Werte können etwa entlang eines zurückzulegenden Strompfads Teilwerte erfasst, aufsummiert und bei Bedarf abgefragt werden. Auf diese Weise kann auch bei einzelnen Netzinfrastrukturkomponenten 12 eine hinreichende Kenntnis des gesamten Verbundsystems 10 vorhanden sein.

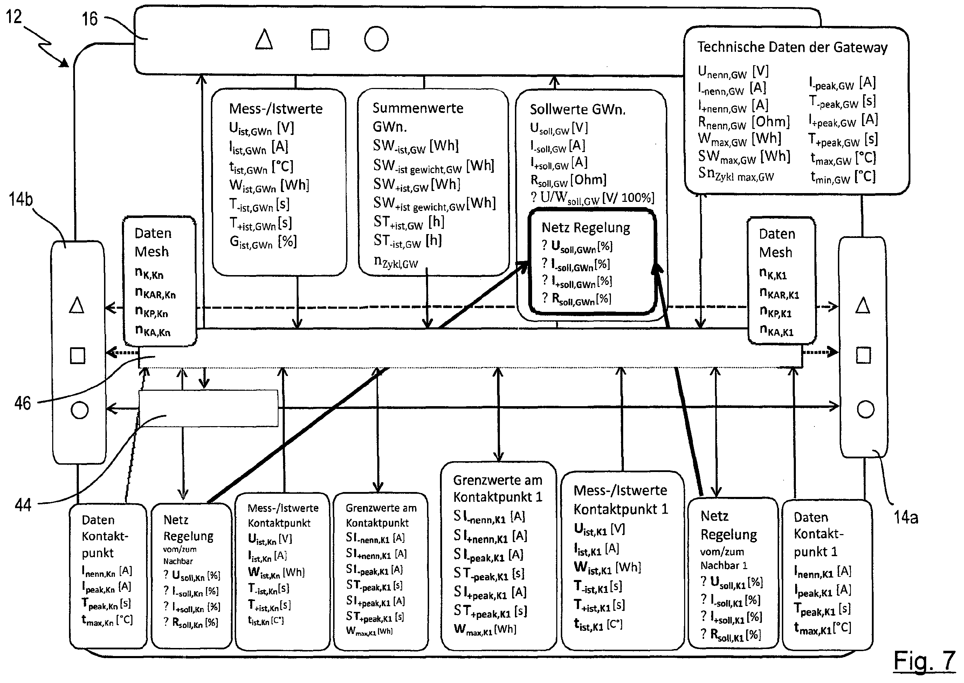

Eine Zuordnung der in den Tabellen 1 und 2 beschriebenen Werte zu einer beispielhaften Netzinfrastrukturkomponente 12 kann der schematischen Darstellung in Fig. 7 entnommen werden.

Fig. 8 zeigt eine Ausführungsform einer Netzinfrastrukturkomponente 12, an die eine Funktionsgruppe 18 gekoppelt ist, die einen Energiespeicher 64 aufweist. Die Funktionsgruppe 18 weist ferner eine Koppeleinheit 74 sowie eine Funktionsebene 76 auf. Die Funktionsebene 76 umfasst eine Wandlereinheit 88 sowie einen Hilfswandler 90. Der Hilfswandler 90 kann dazu ausgebildet sein, eine Niedervoltspannung für die Hilfsspannungsebene 24 bereitzustellen.

Die Wandlereinheit 88 ist dagegen dazu ausgebildet, eine vom Energiespeicher 64 bereitgestellte Spannung in eine Nennspannung der Versorgungsebene 20 der Netzinfrastrukturkomponente 12 zu überführen. Hierzu können beim Wandler 88 etwa ein Stromregler (I-Regler) und/oder ein Spannungsregler (U-Regler) vorgesehen sein.

Die Funktionsebene 76 kann ferner eine Sensoreinheit 92 aufweisen, die dazu ausgebildet ist, Betriebskenndaten, etwa Strom (I), Spannung (U), übertragene Leistung (W), Temperaturen (T oder t) oder Ähnliches, zu erfassen. Die Sensoreinheit 92 kann über die Datenebene 22 etwa mit der Netzinfrastrukturkomponente 12, insbesondere deren Steuergerät 32 (in Fig. 8 nicht dargestellt), kommunizieren.

Auf der Datenebene 22 übermittelte Daten können die beispielhaft in einem Betriebsdatenblock 94 beschriebenen Größen umfassen. Diese Größen können der Wandlereinheit 88 und/oder dem Hilfswandler 90 zugeführt werden. Auf diesem Weg kann insbesondere die Wandlereinheit 88 zur gezielten Lastregelung angesteuert werden.

Der Stromregler der Wandlereinheit 88 kann etwa dazu ausgebildet sein, eine positive Stromgrenze und eine negative Stromgrenze einzuhalten. Der Spannungsregler kann dazu ausgebildet sein, eine gewünschte Nennspannung einzustellen. Zusätzlich kann ein regelbarer Innenwiderstand (R) vorgesehen werden, um das Spannungsniveau weiter zu beeinflussen. Ferner kann beim Spannungsregler eine Regelgröße vorgesehen sein, die auf einem Verhältnis zwischen einer Spannungsdifferenz und einem aktuellen Ladezustand (ΔU/W) beruht. Ein derartiger Wert kann etwa 2 V/100 % betragen. Dies bedeutet etwa bei einer beispielhaften Nennspannung von 48 V, dass die Spannung bei 0 % Ladung 47 V und bei 100 % Ladung 49 V beträgt. Auf diese Weise können alle Energiespeicher (Batterien) im Verbundsystem bei gleicher Nennspannung gemeinsam einen Ladesollwert und/oder Entladesollwert erreichen.

Die durch die Sensoreinheit 92 ermittelten Werte können etwa auch dazu herangezogen werden, eine Restkapazität des angeschlossenen Energiespeichers 64 zu ermitteln bzw. Verbrauchswerte, etwa Stromverbräuche oder Ähnliches, zu erfassen.

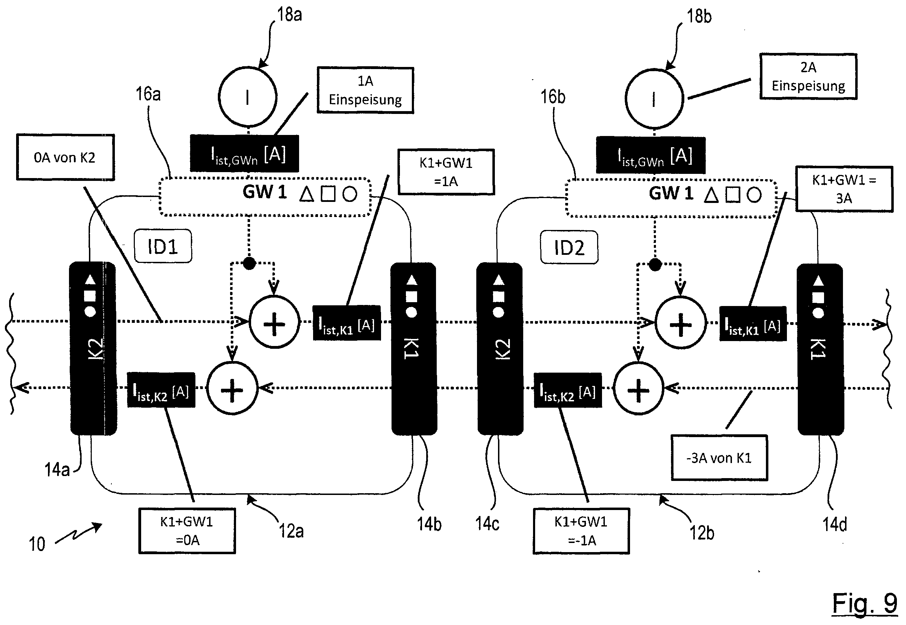

Fig. 9 zeigt eine stark vereinfachte Darstellung zweier miteinander gekoppelter Netzinfrastrukturkomponenten 12a, 12b eines Verbundsystems 10. Die Netzinfrastrukturkomponente 12a ist mit einer Funktionsgruppe 18a gekoppelt Die Netzinfrastrukturkomponente 12b ist mit einer Funktionsgruppe 18b gekoppelt. Bei den Funktionsgruppen 18a, 18b kann es sich insbesondere um Energiespeicher handeln. Einspeisewerte, die etwa der Netzinfrastrukturkomponente 12a zugeführt werden, werden im Fortgang mit den Einspeisewerten, die der Netzinfrastrukturkomponente 2b zugeführt werden, sowie eventuellen vorherigen Einspeisungen aufsummiert. Das heißt, auch in Unkenntnis etwa einer übernächsten Netzinfrastrukturkomponente 12 kann jede der Netzinfrastrukturkomponenten 12 durch Übernahme von Werten ihrer benachbarten Netzinfrastrukturkomponente 12 zur Erfassung der Gesamtfunktionalität des Verbundsystems 10 beitragen. Im Übrigen können bei derartigen Netzstrukturen die Kirchhoffschen Regeln zur Ermittlung der Ströme und Spannungen angewandt werden.

Es ist also nicht erforderlich, dass wesentliche Daten über ein Nachbarschaftsverhältnis zwischen zwei unmittelbar miteinander gekoppelten Netzinfrastrukturkomponenten 12 hinaus an weitere Netzinfrastrukturkomponenten 12 übertragen werden müssen. Auf diese Weise kann das im Gesamten zu übertragende Datenvolumen deutlich begrenzt werden. Gleichwohl kann eine ausreichende Informationsbasis zur Steuerung und Regelung, insbesondere Lastregelung, des gesamten Verbundsystems 10 bereitgestellt werden.

Latenzzeiten für das Durchleiten von Regelgrößen können in einfacher Weise nachvollzogen werden, wobei Regelalgorithmen vorgesehen werden können, um diese entsprechend zu berücksichtigen und/oder zu kompensieren.

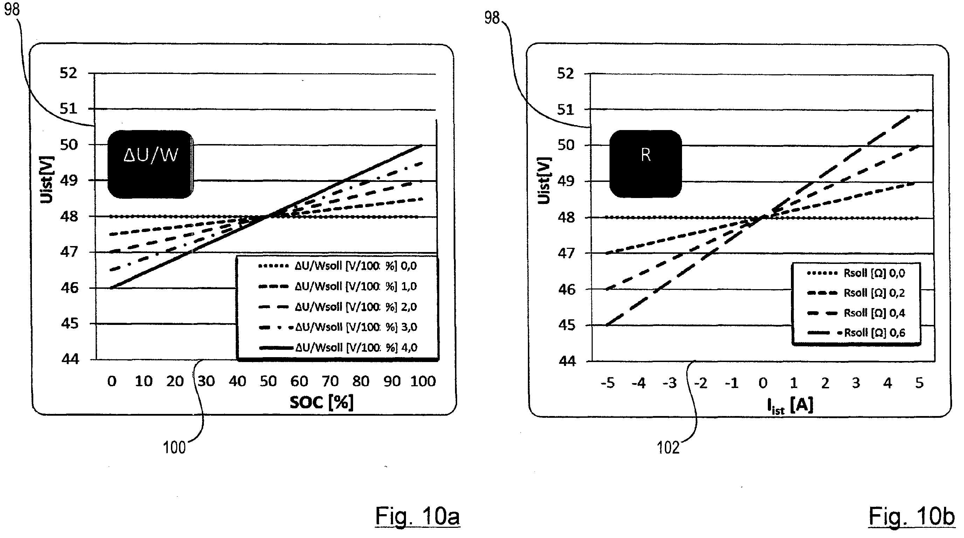

Fig. 10a zeigt ein vereinfachtes Diagramm eines Beispielsystems, das den Einfluss einer Regelgröße ΔU/W auf ein Verhältnis zwischen einer Spannung Uᵢₛₜ und einem Ladezustand SOC (auch: State of Charge) veranschaulicht. Dabei ist eine Spannungsachse mit 98 und eine Ladezustandsachse mit 100 bezeichnet. In Fig. 10a wird das Verhältnis ΔU/W in Stufen variiert.

In ähnlicher Weise veranschaulicht Fig. 10b ein Verhältnis zwischen einer Spannung Uᵢₛₜ und einem Strom Iᵢₛₜ in Abhängigkeit von einem gegebenen Widerstand (Innenwiderstand) Rₛₒₗₗ. Dabei ist die Spannungsachse wiederum mit 98 und eine Stromachse mit 102 bezeichnet. Die Fig. 10a und 10b veranschaulichen mögliche Einflüsse auf die Spannungsregelung.

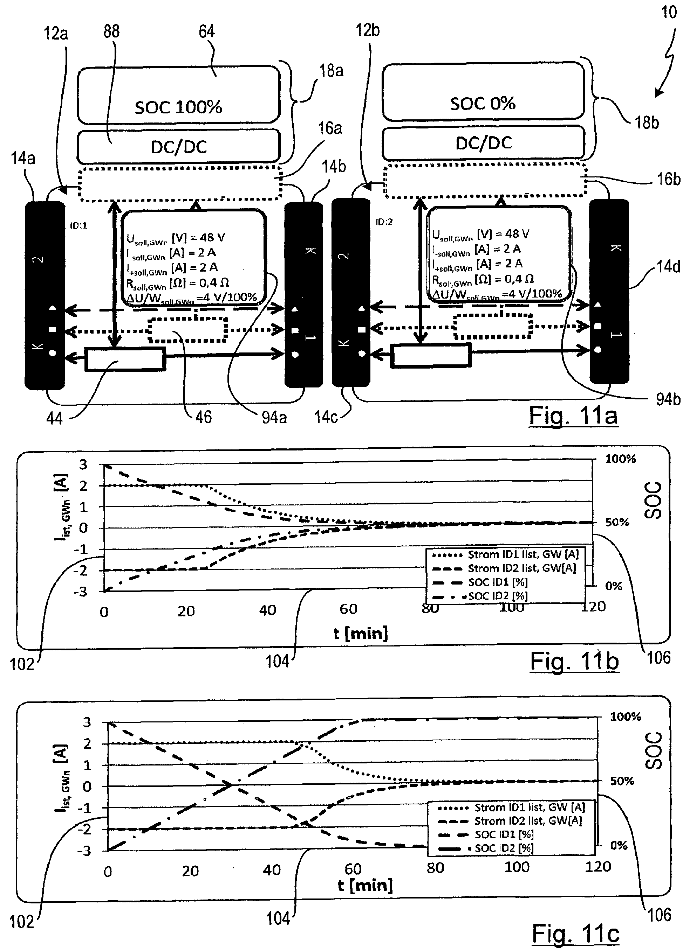

Anhand der Fig. 11a, 11b und 11c können verschiedene Anpassungsprozesse in einem Verbundsystem 10 veranschaulicht werden. Das Verbundsystem 10 gemäß Fig. 11 a weist beispielhaft zwei Netzinfrastrukturkomponenten 12a, 12b auf, die jeweils mit einer Funktionsgruppe 18a, 18b verknüpft sind. Die Funktionsgruppen 18a, 18b weisen jeweils einen Energiespeicher 64 auf. Der der ersten Netzinfrastrukturkomponente 12a zugeordnete Energiespeicher ist im Ausgangszustand vollständig aufgeladen (SOC = 100 %). Der der zweiten Netzinfrastrukturkomponente 12b zugeordnete Energiespeicher 64b ist im Ausgangszustand vollständig entleert (SOC = 0 %).

Fig. 11b veranschaulicht einen Zeitablauf eines Ausgleichsvorgangs zwischen den Ladezuständen der Energiespeicher 64 gemäß Fig. 11a. Dabei ist eine Stromachse I mit 102 bezeichnet. Eine Zeitachse ist mit 104 bezeichnet. Eine mit 106 bezeichnete Achse kennzeichnet einen Ladezustand SOC (auch: State Of Charge) eines Energiespeichers 64. Es wird aus Fig. 11b ersichtlich, dass eine (positive und negative) Strombegrenzung (± 2A) vorgesehen ist, vgl. auch die Betriebsdatenblöcke 94a, 94b in Fig. 11a. Somit erfolgt erst nach einer bestimmten Zeit eine Reduktion des Ladestroms bzw. Entladestroms hin zu einem Ausgleichszustand zwischen den beiden Energiespeichern 64.

Die Darstellung in Fig. 11c geht analog zu Fig. 11b vom gleichen Ausgangszustand gemäß Fig. 11a aus, jedoch erfolgt hier eine Umladung. Das heißt, der ursprünglich vollständig geladene Energiespeicher 64 wird vollständig entladen und umgekehrt. Ausgehend von den Betriebsdatenblöcken 94a, 94b in Fig. 11a kann zur Einleitung der Umladung eine Anpassung der Soll-Vorgaben erfolgen. So können beispielsweise die Sollspannungen angepasst werden. Der in Fig. 11b veranschaulichte Ausgleichsprozess kann durch einheitliche Spannungsvorgabe (hier etwa: Uₛₒₗₗ = 48V für beide Energiespeicher 64) initiert werden. Die Umladung gemäß Fig. 11c kann durch verschiedene Spannungsvorgaben eingeleitet werden, die einen Energiespeicher 64 (ID1) gezielt entladen und einen Energiespeicher 64 (ID2) gezielt laden, ohne einen Ausgleich anzustreben (hier: ID1 Uₛₒₗₗ = 50V, ID2 Uₛₒₗₗ 46V). Wiederum kann eine Strombegrenzung (± 2 A) zum Tragen kommen.

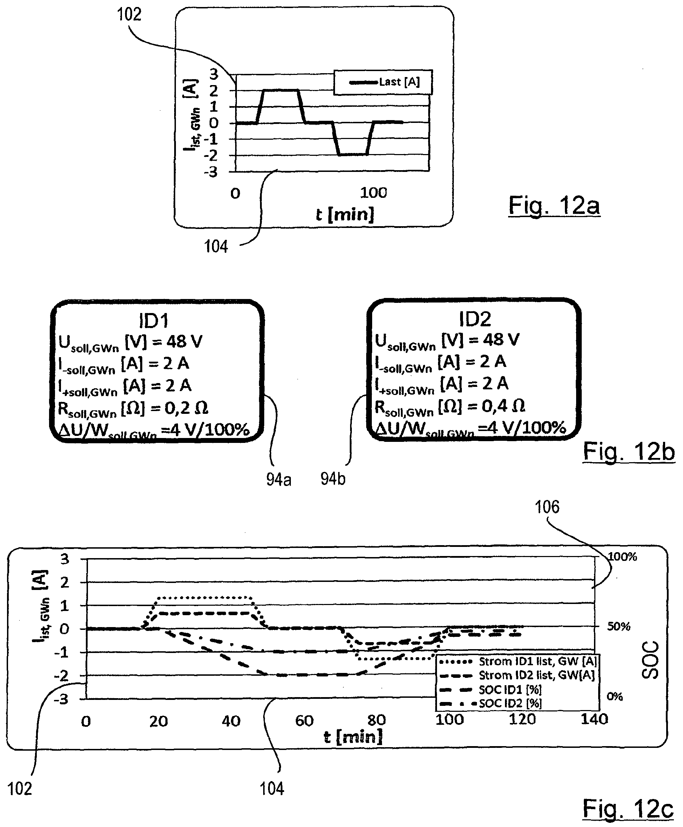

Anschließend zeigen Fig. 12a und Fig. 12c miteinander im Zeitablauf korrespondierende Diagramme, wie sich bei einer gegebenen Belastung, vgl. Fig. 12a, eine Stromverteilung in zwei Energiespeichern 64, etwa gemäß Fig. 11a, ergeben kann. Zugehörige Betriebsparameter können den Betriebsdatenblöcken 94a, 94b in Fig. 12b entnommen werden. Die Ursache für die unterschiedlichen Verläufe in Fig. 12c sind darin zu sehen, dass für beide Energiespeicher 64 verschiedene Innenwiderstandssollwerte Rₛₒₗₗ (einmal 0,2 Ω, einmal 0,4 Ω) vorgegeben sind.

Im Ergebnis zeigt sich in Fig. 12c, dass der der Netzinfrastrukturkomponente 12a mit dem geringeren Innenwiderstand Rₛₒₗₗ zugeordnete Energiespeicher 64 bei Belastungen (Entladungen und Ladungen) im umgekehrten Verhältnis zum Verhältnis der Innenwiderstände Rₛₒₗₗ zwischen den Betriebsdatenblöcken 94a und 94b Strom aufnimmt bzw. abgibt.

Auf diese Weise wird veranschaulicht, dass durch Variation des Innenwiderstands Rₛₒₗₗ auf die Eigenheiten verschiedener Energiespeicher 64 eingegangen werden kann. Beispielhaft kann bei fortgeschrittener Alterung eines Energiespeichers 64 durch Wahl eines höheren Innenwiderstands ein kleinerer Stromfluss bewirkt werden.

Gemäß einer weiteren Ausführungsform können für einzelne oder sämtliche Netzinfrastrukturkomponenten 12 eines Verbundsystems 10 verschiedene Zugriffsrechte, insbesondere rollenbasierte Zugriffsrechte, vergeben werden. Diese Zugriffsrechte können sich etwa auf die Versorgungsebene 20, die Datenebene 22 und/oder die Hilfsspannungsebene 24 beziehen. Aus Sicht einer Netzinfrastrukturkomponente 12 können beispielsweise folgende Rollen auftreten: benachbarte Netzinfrastrukturkomponente, Gast, Hersteller, Service, Besitzer, Benutzer, Netzbetreiber und Benutzergruppe. Weitere Rollen sind denkbar.

Den genannten Rollen können spezifische Zugriffsrechte gewährt werden, etwa in folgenden Bereichen: Datenübertragung, Kopplungsmoduldaten (Gatewaydaten), Versorgungsebene, Versorgungsnetz, Versorgungsebenenzugriff über Kopplungsmodule, (Zugriff auf) Zugriffsrechte, Softwareupdate, Netzwerte und Hilfsspannung.

Zugriffsrechte können etwa einen unmittelbaren Zugriff und/oder einen Passwort- bzw. Login-basierten Zugriff umfassen. Daneben kann mittels der Zugriffsrechte etwa bestimmt werden, ob ein Rolleninhaber lesen und/oder schreiben darf, sowie ob etwa geladen und/oder entladen werden darf, ferner etwa dahingehend, auf wie viele benachbarte Knoten sich die Zugriffsrechte erstrecken können. Auf diese Weise können Zugriffsrechte in tabellarischer Form verwaltet werden.

Beispielhaft können bei der Netzinfrastrukturkomponente 12 spezifische Zugriffstabellen hinterlegt werden, etwa für verschiedene Verwertungsarten. Dies kann etwa einen Verkauf, eine Vermietung, Leasing, öffentliche oder private Bereitstellung und Ähnliches betreffen sowie auf das Verbundsystem 12 und/oder Funktionsgruppen 18 bezogen sein.

Ein Monitoringsystem, etwa ein internetbasiertes Überwachungssystem (vgl. auch Fig. 5), kann eine rollenabhängige Generierung von Daten sowie deren Bereitstellung, inklusive rollenbasierter Zugriffsrechte darauf, ermöglichen. Dies kann etwa so weit gehen, dass einzelne Netzinfrastrukturkomponenten 12 über netzbasierte Anwendungen lokalisiert werden können. Ein solcher Onlinezugriff zu Monitoringzwecken erlaubt es einem Benutzer und/oder Besitzer, einen Überblick über Kapazitäten, Verbräuche, Leistungen und/oder angefallene bzw. zu erwartende Kosten zu erlangen.

Auf diese Weise können etwa per Fernüberwachung beschädigte und/oder defekte Funktionsgruppen detektiert werden, insbesondere fehlerhafte Energiespeicher 64.

Bei entsprechender Skalierung kann ein Verbundsystem 10, das mittels einer Mehrzahl von Netzinfrastrukturkomponenten 12 mit einer Mehrzahl von Energiespeicher 64 aufweisenden Funktionsgruppen 18 verknüpft ist, etwa zum Antrieb von Elektrowerkzeugen, Elektrofahrrädern, Elektrorollern, Elektrofahrzeugen allgemein und/oder als Spitzenstromspeicher oder Pufferspeicher für Anlagen zur regenerativen Energiegewinnung, insbesondere Solaranlagen und Windkraftanlagen, genutzt werden. Somit kann Energie effizient und bedarfsgerecht bzw. verfügbarkeitsgesteuert bereitgestellt werden.

Die durch die neben der Versorgungsebene 20 vorgesehene Datenebene 22 ermöglichte Kommunikation erlaubt es insgesamt, das Netz mit weniger "Sicherheitsreserve" zu betreiben, da im Vergleich zu konventionellen Netzen mit deutlich weniger unvorhersehbaren Lastschwankungen zu rechnen ist.

Der systemimmanente Datenaustausch erlaubt es, Netze effizienter zu gestalten und auf einen genauen, nahezu deckungsgleichen Abgleich zwischen Bereitstellung und Anforderung von elektrischer Energie hinzuwirken.

Der offene Ansatz trägt dazu bei, eine Vielzahl von (elektrischen) Energiespeichern in einem System zusammenfassen zu können und für Verbraucher und/oder Erzeuger verfügbar zu machen. Auf diese Weise können Nachteile proprietärer Lösungen umgangen werden.

Die offene und selbstkonfigurierende Struktur erlaubt es, das Verbundsystem 10 flexibel und anwendungsgerecht zu gestalten. Insbesondere Änderungen und Erweiterungen können nahezu ohne zusätzlichen Einrichtungsaufwand durchgeführt werden.

Die Konzeption als verteiltes System erlaubt es, große zentrale, mit wesentlichen Nachteilen behaftete Versorgungssysteme durch verteilte Systeme zu ersetzen, bei denen eine Vielzahl von kleinen Einheiten miteinander gekoppelt sind, die wesentlich anwendungsfreundlicher gestaltet sind. Insbesondere im Falle von Beschädigungen der Energiespeicher können bei verteilten Systemen Folgeschäden reduziert oder gänzlich vermieden werden.

## Patentansprüche

1. Netzinfrastrukturkomponente (12), die folgendes aufweist:
zumindest eine Kontakteinheit (14) zur Verbindung mit einer weiteren Netzinfrastrukturkomponente (12),
zumindest ein Kopplungsmodul (16) zur Ankopplung einer Funktionsgruppe (18),
wobei die Netzinfrastrukturkomponente (12) dazu ausgebildet ist, zumindest auf einer Versorgungsebene (20) mit einer angekoppelten Funktionsgruppe (18) zu kommunizieren und mit zumindest einer weiteren Netzinfrastrukturkomponente (12) zumindest auf einer Datenebene (22) zu kommunizieren,
**dadurch gekennzeichnet, dass** die Netzinfrastrukturkomponente (12) des weiteren dazu ausgebildet ist, mit zumindest einer weiteren Netzinfrastrukturkomponente (12) auf der Versorgungsebene (20) zu kommunizieren, so dass mit einem Verbund einer Mehrzahl von Netzinfrastrukturkomponenten (12) ein selbstkonfiguriertes Verbundsystem (10) zur Verknüpfung einer Mehrzahl von Funktionsgruppen (18) erzeugbar ist.

2. Netzinfrastrukturkomponente (12) nach Anspruch 1, ferner aufweisend eine Steuereinrichtung (32) zur Steuerung von Betriebsparametern, insbesondere für eine Lastregelung auf der Versorgungsebene (20).

3. Netzinfrastrukturkomponente (12) nach Anspruch 2, wobei die Steuereinrichtung (32) ferner dazu ausgebildet ist, Kenndaten der angekoppelten Funktionsgruppe (18) zu erfassen, insbesondere auf der Versorgungsebene (20) und/oder der Datenebene (22).

4. Netzinfrastrukturkomponente (12) nach Anspruch 2 oder 3, wobei die Steuereinrichtung (32) dazu ausgebildet ist, Betriebsparameter zumindest einer weiteren kontaktierten Netzinfrastrukturkomponente (12) bei der Steuerung zu berücksichtigen.

5. Netzinfrastrukturkomponente (12) nach einem der Ansprüche 2 bis 4, bei der die Steuereinrichtung (32) dazu ausgebildet ist, erfasste Betriebsparameter auf der Datenebene (22) an zumindest eine weitere kontaktierte Netzinfrastrukturkomponente (12) zu übermitteln, und/oder
ferner aufweisend zumindest ein Sensorelement (42), insbesondere einen Temperatursensor und/oder einen Beschleunigungssensor, wobei das zumindest eine Sensorelement (42) durch die Steuereinrichtung (32) ansprechbar ist, und/oder
bei der die Steuereinrichtung (32) regelbasierte Zugriffsrechte für einen Benutzer bereitstellt und/oder
bei der die Steuereinrichtung (32) dazu ausgebildet ist, eine Lastbegrenzung und/oder Lastabschaltung für die angekoppelte Funktionsgruppe (18) durchzuführen.

6. Netzinfrastrukturkomponente (12) nach einem der vorhergehenden Ansprüche, die ferner dazu ausgebildet ist, mit zumindest einer weiteren Netzinfrastrukturkomponente (12) und/oder der angekoppelten Funktionsgruppe (18) auf einer Hilfs- energieebene (24), insbesondere einer Hilfsspannungsebene, zu kommunizieren, und/oder
die eine Authentifikationseinheit (80) für einen Benutzer aufweist, die insbesondere mit der Steuereinrichtung (32) gekoppelt ist, und/oder
bei der die Kommunikation auf der Datenebene (22) mit der zumindest einen weiteren Netzinfrastrukturkomponente (12) und/oder der angekoppelten Funktionsgruppe (18) mittels drahtloser Datenübertragung erfolgt, vorzugsweise mittels elektromagnetischer Wellen, weiter bevorzugt mittels RFID-Technik, und/oder
die ferner eine Identifikationseinheit (52) aufweist, die es erlaubt, die Netzinfrastrukturkomponente (12) und jedes Kopplungsmodul (16) und/oder jede Kontakteinheit (14) eindeutig zu identifizieren.

7. Verteiltes Verbundsystem (10) zu Versorgungszwecken, das zum Transport eines Netzmediums auf einer Versorgungsebene (20) ausgebildet ist, mit einer Mehrzahl gekoppelter Netzinfrastrukturkomponenten (12) nach irgendeinem der vorhergehenden Ansprüche.

8. Verbundsystem (10) nach Anspruch 13, bei dem das Netzmedium elektrische Energie ist und wobei die Versorgungsebene (20) insbesondere als Gleichspannungsnetz ausgebildet ist, und/oder
die Netzinfrastrukturkomponenten (12) mit jeweils zumindest einer Funktionsgruppe (18) koppelbar sind, die als Verbraucher, Versorger und/oder Speicher ausgebildet ist, und/oder
zumindest eine Netzinfrastrukturkomponente (12) zumindest temporär mit einem externen Monitoringsystem (70) koppelbar ist, das eine Beobachtung und Erfassung von Betriebsparametern und Servicedaten erlaubt.

9. Verbundsystem (10) nach Anspruch 7 oder 8, ferner umfassend ein Leitungssystem zur Verbindung der gekoppelten Netzinfrastrukturkomponenten (12).

10. Verbundsystem (10) nach Anspruch 9, wobei das Leitungssystem ein Versorgungsnetz (44) für das Netzmedium und ein Datennetz (46) für Kommunikationsdaten aufweist.

11. Verbundsystem (10) nach Anspruch 9 oder 10, das ferner ein Hilfsenergienetz (48), insbesondere ein Hilfsspannungsnetz, aufweist.

12. Verbundsystem (10) nach einem der Ansprüche 7 bis 11, bei dem ferner zumindest eine Wandlereinheit (88) zwischen einer Netzinfrastrukturkomponente (12) und einer angekoppelten Funktionsgruppe (18) vorgesehen ist, insbesondere ein Spannungswandler, und/oder
zumindest eine gekoppelte Funktionsgruppe (18) eine auslesbare Darstellung von Kenndaten (78) bereitstellt, die der Steuereinrichtung (32) einer der Netzinfrastrukturkomponenten (12) zuführbar ist, und/oder
die Netzinfrastrukturkomponenten (12) eine integrierte Lastregelung für das gesamte verteilte Verbundsystem (10) bereitstellen, und/oder
jede Kontakteinheit (14) und jedes Kopplungsmodul (16) jeder Netzinfrastrukturkomponente (12) eindeutig identifizierbar ist, und/oder
eine Mehrzahl von durch verschiedene Versorgungsleitungen verkörperten Versorgungsebenen (20) vorgesehen ist, insbesondere eine Kombination aus Leitungen für elektrische Energie und Leitungen für thermische Energie, und/oder
eine Mehrzahl von Funktionsgruppen (18) vorgesehen ist, die mit einer Netzinfrastrukturkomponente (12) gekoppelt sind und die als wiederaufladbare Energiespeicher (64) ausgebildet sind, wobei das Verbundsystem (10) ein Speichermanagement bereitstellt.

13. Verwendung eines Verbundsystems (10) nach einem der Ansprüche 7 bis 12
zum Antrieb eines Fahrzeugs mit einem zumindest teilweise elektrischen Antrieb oder
als Versorgungssystem für regenerative Energien oder
zum Betrieb von netzunabhängigen Elektrowerkzeugen oder
als Pufferspeicher für Fremdnetze oder
als Wechselstation zum Austausch von Energiespeichern (64).

## Claims

1. Network infrastructure component (12) comprising the following:
at least one contact unit (14) for connection to a further network infrastructure component (12),
at least one coupling module (16) for coupling a functional group (18),
wherein the network infrastructure component (12) is designed to communicate with a coupled functional group (18) at least at a supply level (20) and to communicate with at least one further network infrastructure component (12) at least at a data level (22),
**characterized in that** the network infrastructure component (12) is furthermore designed to communicate with at least one further network infrastructure component (12) at the supply level (20), such that a self-configured composite system (10) for linking a plurality of functional groups (18) can be produced with a composite of a plurality of network infrastructure components (12).

2. Network infrastructure component (12) according to Claim 1, furthermore comprising a control device (32) for controlling operating parameters, in particular for load regulation at the supply level (20).

3. Network infrastructure component (12) according to Claim 2, wherein the control device (32) is furthermore designed to detect characteristic data of the coupled functional group (18), in particular at the supply level (20) and/or the data level (22).

4. Network infrastructure component (12) according to Claim 2 or 3, wherein the control device (32) is designed to take account of operating parameters of at least one further contact-connected network infrastructure component (12) during the control.

5. Network infrastructure component (12) according to any of Claims 2 to 4, wherein the control device (32) is designed to communicate detected operating parameters at the data level (22) to at least one further contact-contacted network infrastructure component (12), and/or furthermore comprising at least one sensor element (42), in particular a temperature sensor and/or an acceleration sensor, wherein the at least one sensor element (42) can be addressed by the control device (32), and/or wherein the control device (32) provides rule-based access rights for a user and/or wherein the control device (32) is designed to carry out load limiting and/or load disconnection for the coupled functional group (18).

6. Network infrastructure component (12) according to any of the preceding claims, which is furthermore designed to communicate with at least one further network infrastructure component (12) and/or the coupled functional group (18) at an auxiliary energy level (24), in particular an auxiliary voltage level, and/or which comprises an authentication unit (80) for a user, said authentication unit being coupled, in particular, to the control device (32), and/or wherein the communication at the data level (22) with the at least one further network infrastructure component (12) and/or the coupled functional group (18) is carried out by means of wireless data transmission, preferably by means of electromagnetic waves, with further preference by means of RFID technology, and/or which furthermore comprises an identification unit (52), which allows the network infrastructure component (12) and each coupling module (16) and/or each contact unit (14) to be unambiguously identified.

7. Distributed composite system (10) for supply purposes, which is designed for transporting a network medium at a supply level (20), comprising a plurality of coupled network infrastructure components (12) according to any of the preceding claims.

8. Composite system (10) according to Claim 13, wherein the network medium is electrical energy, and wherein the supply level (20) is designed, in particular, as a DC voltage network, and/or the network infrastructure components (12) can be coupled to in each case at least one functional group (18) designed as consumer, supplier and/or store, and/or at least one network infrastructure component (12) can be coupled at least temporarily to an external monitoring system (70) which allows observation and detection of operating parameters and service data.

9. Composite system (10) according to Claim 7 or 8, furthermore comprising a line system for connecting the coupled network infrastructure components (12).

10. Composite system (10) according to Claim 9, wherein the line system comprises a supply network (44) for the network medium and a data network (46) for communication data.

11. Composite system (10) according to Claim 9 or 10, which furthermore comprises an auxiliary energy network (48), in particular an auxiliary voltage network.

12. Composite system (10) according to any of Claims 7 to 11, wherein provision is furthermore made of at least one converter unit (88) between a network infrastructure component (12) and a coupled functional group (18), in particular a voltage converter, and/or at least one coupled functional group (18) provides a readable representation of characteristic data (78) which can be fed to the control device (32) of one of the network infrastructure components (12), and/or the network infrastructure components (12) provide integrated load regulation for the entire distributed composite system (10), and/or each contact unit (14) and each coupling module (16) of each network infrastructure component (12) can be unambiguously identified, and/or provision is made of a plurality of supply levels (20) embodied by different supply lines, in particular a combination of lines for electrical energy and lines for thermal energy, and/or a plurality of functional groups (18) are provided, which are coupled to a network infrastructure component (12) and which are designed as rechargeable energy stores (64), wherein the composite system (10) provides store management.

13. Use of a composite system (10) according to any of Claims 7 to 12
for the drive of a vehicle with an at least partly electrical drive or as supply system for regenerative energies or for operating network-independent electric tools or as buffer store for foreign networks or as change station for exchanging energy stores (64).

## Revendications

1. Composant d'une infrastructure réseau (12), qui présente les éléments suivants :
au moins une unité de contact (14) pour le raccordement à un autre composant d'une infrastructure réseau (12),
au moins un module de couplage (16) pour l'accouplement à un groupe fonctionnel (18),
le composant d'une infrastructure réseau (12) étant constitué pour communiquer au moins sur un niveau d'alimentation (20) avec un groupe fonctionnel (18) connecté et pour communiquer avec au moins un autre composant d'une infrastructure réseau (12) sur au moins un niveau données (22),
**caractérisé en ce que** le composant d'une infrastructure réseau (12) est également constitué pour communiquer avec au moins un autre composant d'une infrastructure réseau (12) sur le niveau alimentation (20) de telle sorte que, avec un ensemble formé d'une pluralité de composants d'une infrastructure réseau (12), un système mixte (10) auto-configuré peut être produit pour la combinaison d'une pluralité de groupes fonctionnels (18).

2. Composant d'une infrastructure réseau (12) selon la revendication 1, présentant également un dispositif de commande (32) pour la commande de paramètres de fonctionnement, en particulier pour une régulation de la charge sur le niveau alimentation (20).

3. Composant d'une infrastructure réseau (12) selon la revendication 2, le dispositif de commande (32) étant également constitué pour détecter des données caractéristiques du groupe fonctionnel (18) connecté, en particulier sur le niveau alimentation (20) et/ou le niveau données (22).

4. Composant d'une infrastructure réseau (12) selon la revendication 2 ou 3, le dispositif de commande (32) étant constitué pour prendre en compte, pour la commande, des paramètres de fonctionnement d'au moins un autre composant d'une infrastructure réseau (12) contacté.

5. Composant d'une infrastructure réseau (12) selon l'une des revendications 2 à 4, dans lequel le dispositif de commande (32) est constitué pour transmettre à au moins un autre composant d'une infrastructure réseau (12) contacté des paramètres de fonctionnement détectés sur le niveau données (22), et/ou
présentant également au moins un élément de capteur (42), en particulier un capteur de température et/ou un capteur d'accélération, l'élément de capteur (42) au moins au nombre de un pouvant être sollicité par le dispositif de commande (32), et/ou
dans lequel le dispositif de commande (32) fournit pour un utilisateur des droits d'accès basés sur des règles et/ou
dans lequel le dispositif de commande (32) est constitué pour réaliser une limitation de charge et/ou une coupure de charge pour le groupe fonctionnel (18) connecté.

6. Composant d'une infrastructure réseau (12) selon l'une des revendications précédentes, qui est également constitué pour communiquer avec au moins un autre composant d'une infrastructure réseau (12) et/ou le groupe fonctionnel (18) connecté sur un niveau d'énergie auxiliaire (24), en particulier un niveau de tension auxiliaire, et/ou
qui présente une unité d'authentification (80) pour un utilisateur qui est couplée en particulier au dispositif de commande (32), et/ou
dans lequel la communication s'effectue sur le niveau données (22) avec l'autre composant d'une infrastructure réseau (12) au moins au nombre de un et/ou avec le groupe fonctionnel (18) connecté au moyen d'une transmission de données sans fil, de préférence au moyens d'ondes électromagnétiques, plus préférentiellement au moyen de la technique RFID, et/ou
qui présente également une unité d'identification (52) qui permet d'identifier sans ambiguïté le composant d'une infrastructure réseau (12) et chaque module de couplage (16) et/ou chaque unité de contact (14).

7. Système mixte (10) distribué destiné à des fins d'alimentation, qui est constitué pour le transport d'un support de réseau sur un niveau alimentation (20), avec une pluralité de composants d'une infrastructure réseau (12) couplés selon l'une quelconque des revendications précédentes.

8. Système mixte (10) selon la revendication 13, dans lequel le support de réseau est l'énergie électrique, et le niveau alimentation (20) étant constitué en particulier en tant que réseau à tension continue, et/ou
les composants d'une infrastructure réseau (12) peuvent être couplés à respectivement au moins un groupe fonctionnel (18) qui est constitué en tant que consommateur, fournisseur et/ou accumulateur, et/ou
au moins un composant d'une infrastructure réseau (12) peut être couplé au moins temporairement à un système de surveillance (70) externe qui permet une observation et une détection de paramètres de fonctionnement et de données de service.

9. Système mixte (10) selon la revendication 7 ou 8, comprenant également un système de lignes pour le raccordement des composants d'une infrastructure réseau (12) couplés.

10. Système mixte (10) selon la revendication 9, le système de lignes présentant un réseau d'alimentation (44) pour le support de réseau et un réseau de données (46) pour des données de communication.

11. Système mixte (10) selon la revendication 9 ou 10, qui présente également un réseau d'énergie auxiliaire (48), en particulier un réseau de tension auxiliaire.

12. Système mixte (10) selon l'une des revendications 7 à 11, dans lequel il est également prévu au moins une unité de conversion (88) entre un composant d'une infrastructure réseau (12) et un groupe fonctionnel (18) connecté, en particulier un convertisseur de tension, et/ou
au moins un groupe fonctionnel (18) couplé fournit une représentation lisible de données caractéristiques (78) qui peut être acheminée au dispositif de commande (32) d'un des composants d'une infrastructure réseau (12), et/ou
les composants d'une infrastructure réseau (12) fournissent une régulation intégrée de la charge pour la totalité du système mixte (10) distribué, et/ou
chaque unité de contact (14) et chaque module de couplage (16) de chaque composant d'une infrastructure réseau (12) peuvent être identifiés sans ambiguïté, et/ou
une pluralité de niveaux d'alimentation (20) prenant la forme de différentes lignes d'alimentation sont prévus, en particulier une combinaison de lignes pour l'énergie électrique et de lignes pour l'énergie thermique, et/ou
une pluralité de groupes fonctionnels (18) sont prévus, qui sont couplés à un composant d'une infrastructure réseau (12) et qui sont constitués en tant qu'accumulateurs d'énergie (64) rechargeables, le système mixte (10) fournissant une gestion d'accumulateur.

13. Utilisation d'un système mixte (10) selon l'une des revendications 7 à 12,
pour l'entraînement d'un véhicule avec un entraînement au moins partiellement électrique ou
en tant que système d'alimentation pour des énergies renouvelables ou
pour le fonctionnement d'outils électriques indépendants du réseau ou
en tant qu'accumulateurs tampons pour des réseaux extérieurs ou
en tant que station de changement pour le remplacement d'accumulateurs d'énergie (64).
